# EUROPÄISCHE PATENTSCHRIFT

(11) **EP 3 981 515 B1**
(45) Veröffentlichungstag und Bekanntmachung des Hinweises auf die Patenterteilung: **29.03.2023**
(21) Anmeldenummer: 20200935.3
(22) Anmeldetag: 09.10.2020
(51) Int. Cl.: B02C 18/24, B02C 18/00, B02C 18/14, B02C 18/16

(54) **ZERKLEINERUNGSVORRICHTUNG ZUR ZERKLEINERUNG VON ZERKLEINERUNGSGUT**
CRUSHING DEVICE FOR CRUSHING MATERIAL
DISPOSITIF DE BROYAGE PERMETTANT DE BROYER UN PRODUIT DEVANT ÊTRE BROYÉ

(43) Veröffentlichungstag der Anmeldung: 13.04.2022
(73) Patentinhaber: Doppstadt Beteiligungs GmbH, 42555 Velbert (DE)
(72) Erfinder: DOPPSTADT, Ferdinand, 42555 Velbert (DE)
(74) Vertreter: Weidener, Jörg Michael

(56) Entgegenhaltungen:
- DE-B3-102013 114 782
- US-A- 3 873 035
- US-A1- 2011 272 513

## Beschreibung

Die Erfindung betrifft eine Zerkleinerungsvorrichtung zur Zerkleinerung von Zerkleinerungsgut, insbesondere zur Verwendung im Bereich des Recyclings und der Abfallverarbeitung, mit wenigstens einer um eine Zentralachse drehbaren Zerkleinerungswalze und wenigstens einer Antriebseinrichtung zum Antrieb der Zerkleinerungswalze.

Zerkleinerungseinrichtungen der vorgenannten Art, die insbesondere im Schwerlastbereich beim Abfallrecycling und der Abfallverarbeitung verwendet werden, sind aus der Praxis bereits bekannt. Sie werden üblicherweise mit Drehzahlen im Bereich von bis zu 400 U/min betrieben. Während des Betriebes wird der jeweiligen Zerkleinerungsvorrichtung Zerkleinerungsgut, das auch als Substrat bezeichnet wird, zugeführt. Je nach Einsatzzweck und Aufgabegut kann es dazu kommen, dass das Zerkleinerungsgut nicht ohne Weiteres in die gewünschte Form zerkleinert werden kann. Dies kann während des Betriebes zur spontanen Überlast und zu extremen Lastspitzen führen. Hierdurch können die üblicherweise an der Zerkleinerungswalze vorgesehenen Zerkleinerungswerkzeuge stark belastet und in der Folge beschädigt oder gar zerstört werden. Des Weiteren führen Lastspitzen der vorgenannten Art auch zu nicht-berechenbaren Überlastspitzen in den üblicherweise der Antriebseinrichtung zugeordneten Getrieben, was zu Getriebebeschädigungen oder gar zur Getriebezerstörung führen kann. Darüber hinaus tragen Überlastspitzen auch erheblich zur Erhöhung des Schallpegels der Arbeits- und Betriebsgeräusche bei, was nicht nur das im Bereich der Zerkleinerungsvorrichtung arbeitende Betriebspersonal belastet, sondern auch Anwohner, in deren Nähe die Zerkleinerungsvorrichtung aufgestellt ist.

Nachteilig bei den bekannten Zerkleinerungsvorrichtungen ist im Übrigen, dass sie eine vergleichsweise große Baugröße haben. Dies liegt nicht zuletzt daran, dass sich aufgrund der beim Stand der Technik üblichen Ausbildung der Antriebseinrichtung mit Motor und Getriebe eine vergleichsweise große Breite ergibt, die letztlich bedingt, dass die bekannten Zerkleinerungsvorrichtungen nur als Schwerlasttransport befördert werden können.

Aufgabe der Erfindung ist es nun, die eingangs genannten Nachteile zu reduzieren oder zumindest im Wesentlichen zu vermeiden.

Die US 2011/272513 A1 betrifft eine Recyclingvorrichtung, die eine Zuführeinrichtung, einen Schredder und einen Separator umfasst. Der Antriebsstrang des Shredders umfasst Reibräder.

Die US 3 873 035 A betrifft eine Vorrichtung zum Behandeln von Müll.

Die DE 10 2013 114 782 B3 betrifft ein Verfahren zum Betrieb einer Zerkleinerungsvorrichtung, bei welchem von einer Antriebseinrichtung, die zumindest einen Drehstrom-Elektromotor umfasst, ein Zerkleinerungsrotor über ein kraftschlüssiges Zugmittelgetriebe angetrieben wird.

In der gezeigten Zerkleinerungsvorrichtung ist vorgesehen, dass die Antriebseinrichtung ein drehsteif mit der Zerkleinerungswalze verbundenes Zentralrad und wenigstens ein an der Außenoberfläche des Zentralrades kraftschlüssig angreifendes und zum Antrieb des Zentralrades ausgebildetes Antriebsrad aufweist. Das wenigstens eine Antriebsrad bildet damit gemeinsam mit dem Zentralrad einen Reibradantrieb.

Erfindungsgemäß ist eine Zerkleinerungsvorrichtung gemäß Anspruch 1 vorgesehen. Insbesondere verläuft die Mittelachse des Stützrades zumindest im Wesentlichen parallel zur Zentralachse, wobei sich dies wiederum auf den Nicht-Betriebszustand bezieht. Alternativ oder zusätzlich kann vorgesehen sein, dass die Mittelachse des Stützrades zumindest im Wesentlichen parallel zur Drehachse wenigstens eines Antriebsrades verläuft.

Vorzugsweise ist das Stützrad als drehbares Widerlager für das Zentralrad ausgebildet. Darüber hinaus kann das Stützrad ebenfalls als Reibrad ausgebildet sein und dient bevorzugt zur Aufnahme der Reaktionskräfte und/oder der Drehmomente der Zerkleinerungswalze. Letztlich kann das Stützrad das Zentralrad bzw. die Zerkleinerungswalze "abstützen", insbesondere während des Betriebes der Zerkleinerungsvorrichtung.

Besonders bevorzugt ist das Zentralrad als nichtangetriebenes bzw. anzutreibendes Zentralreibrad und das Antriebsrad als von einer entsprechenden Antriebseinrichtung angetriebenes Antriebsreibrad ausgebildet.

Erfindungsgemäß wird nun ermöglicht, dass ein Antrieb des Zentralrades über die Antriebsräder erfolgen kann, insbesondere wobei an dem Zentralrad kein Antriebsmotor angeordnet ist.

Zudem versteht es sich erfindungsgemäß, dass der Begriff "kraftschlüssig" auch durch den Begriff "reibschlüssig" ersetzt bzw. synonym zu diesem verwendet werden kann. Letztlich werden die Reibungskräfte bzw. die Reibung für die Kraftübertragung bzw. die Drehmomentübertragung zwischen dem Zentralrad und dem Antriebsrad zum Antrieb des Zentralrades genutzt, insbesondere wobei zwischen dem Zentralrad und dem wenigstens einen Antriebsrad eine reibschlüssige Verbindung während des Betriebes der Zerkleinerungsvorrichtung vorherrscht.

Insbesondere ist zum Antrieb des Zentralrades kein Formschluss zwischen dem Antriebsrad und dem Zentralrad vorgesehen.

Vorzugsweise ist vorgesehen, dass das Zentralrad durch äußeren Reibschluss mit dem Antriebsrad antreibbar ist, wobei das Antriebsrad einen gegensätzlichen Drehsinn zu dem Zentralrad aufweist. Insbesondere hängt die übertragbare Leistung von der zulässigen Pressung, dem erreichbaren Reibungswert, der Erwärmung des Zentralrades und/oder des Antriebsrades sowie dem Verschleiß durch Schlupf ab.

Durch die vorgenannte Ausgestaltung kann eine hohe übertragbare Leistung von dem Antriebsrad zu dem Zentralrad sichergestellt werden.

Bevorzugt kann durch die erfindungsgemäße Ausgestaltung der Antriebseinrichtung als Reibradantrieb ein selbstregulierendes Verhalten der gesamten Zerkleinerungsvorrichtung gewährleistet werden. Das selbstregulierende Verhalten entsteht letztlich insbesondere dadurch, dass bei zunehmender Drehmomentanforderung - beispielsweise aufgrund schwer zu zerkleinerndem oder eingeklemmtem Zerkleinerungsgut - sich die Andrückkraft zwischen dem Zentralrad und den angetriebenen Antriebsrädern erhöht. So kann sich im Lastfall das auf die Zerkleinerungswalze übertragbare Moment ebenfalls erhöhen.

Alternativ oder zusätzlich kann vorgesehen sein, dass bei geringer Lastanforderung oder im Leerlauf das Zentralrad und/oder das Antriebsrad in der Ursprungsposition bzw. Neutralposition (insbesondere bei Niedriglast) verbleibt. Hierdurch kann insbesondere die Walkarbeit zwischen dem Zentralrad und dem Antriebsrad verringert und/oder der Verschleiß der Antriebsräder kann reduziert werden, was insbesondere eine Verlängerung der Standzeit bedingt.

Letztlich ergibt sich das selbstregulierende Verhalten dadurch, dass sich im Überlastfall die Zerkleinerungswalze "aufbäumen" möchte bzw. eine Ausweichbewegung ausgeführt wird, wodurch sich das Antriebsrad stärker an das Zentralrad andrückt. In diesem Zusammenhang ist insbesondere vorgesehen, dass das wenigstens eine Antriebsrad an einer solchen Position angreifend an dem Zentralrad angeordnet ist, dass bei durchgeführter Ausweichbewegung der Zerkleinerungswalze sich das Antriebsrad stärker an das Zentralrad andrückt. Die erhöhte Kraftübertragung kann wiederum dazu führen, dass das auf die Zerkleinerungswalze wirkende Drehmoment erhöht werden kann. Somit wird vorzugsweise eine bessere Kraftübertragung zwischen Zentralrad und Antriebsrad ermöglicht.

Darüber hinaus kann durch die selbstregelnde (Andrück-)Funktion auch eine energiesparende Betriebsweise der Zerkleinerungsvorrichtung erreicht werden. Insbesondere wird im Leerlauf-Betrieb bzw. im Niedrig-Moment-Betrieb (d. h. bei niedrigem aufzubringenden Drehmoment) wenig Walkarbeit, vorzugsweise zwischen Antriebsrad und Zentralrad, verursacht.

Folglich kann insbesondere ein an unterschiedliche Lastfälle angepasstes Verhalten der Zerkleinerungswalze ermöglicht werden.

Darüber hinaus können die Herstellungskosten der erfindungsgemäßen Zerkleinerungsvorrichtung im Vergleich zu aus dem Stand der Technik bekannten Zerkleinerungsvorrichtung um wenigstens 20 % reduziert werden. Eine Senkung der Herstellungskosten kann letztlich dadurch erreicht werden, dass beispielsweise eine geringe Anzahl von insbesondere spanend zu bearbeitenden Bauteilen im Antriebsund Leistungsstrang der Zerkleinerungsvorrichtung eingesetzt wird. Auch der Einsatz von spanend zu bearbeitenden Bauteilen im Gehäuse bzw. Gestell kann reduziert werden. Insbesondere sind Schlüsselbauteile des Antriebsstranges am Markt verfügbare Maschinenelemente, die gezielt und innovativ im Antriebsstrang der Zerkleinerungsvorrichtung eingesetzt werden können, insbesondere wobei jedoch die Bauteilkosten selbst im Vergleich zu aus dem Stand der Technik bekannten Zerkleinerungsvorrichtungen reduziert werden können.

Ferner kann durch die Realisierung des Reibradantriebs eine Drehzahluntersetzung erfolgen, insbesondere im hohen Drehmomentbereich der letzten Untersetzungsstufe, insbesondere von 3:1 bis 6:1, vorzugsweise von 4:1.

Insbesondere kann eine zwischengeschaltete Getriebeuntersetzung entfallen, die andernfalls im Stand der Technik aufgrund der benötigten Einstellbarkeit des Drehmomentes benötigt wird. Durch den Entfall einer zwischengeschalteten Getriebeuntersetzung und da für das Antriebsrad letztlich nur ein relativ kleiner Motor benötigt wird, ergeben sich letztlich auch verringerte Abmaße der erfindungsgemäßen Zerkleinerungsvorrichtung. Alternativ oder zusätzlich kann grundsätzlich aber auch bei der Erfindung vorgesehen sein, dass ein Untersetzungsgetriebe im Antriebsstrang bzw. an/in der Antriebseinrichtung eingesetzt wird.

Bevorzugt kann eine verfahrenstechnische Verbesserung des Betriebes der Zerkleinerungsvorrichtung durch die Variation von außen zugänglichen Antriebsrädern erreicht werden, so dass beispielsweise austauschbare Antriebsräder eingesetzt werden können, die an das Zerkleinerungsgut bzw. die Zerkleinerungsaufgabe angepasst sein können. Ganz besonders bevorzugt kann die Antriebseinrichtung schnell und einfach verschiedenen Situationen bzw. Lastfällen und/oder unterschiedlichen Arten von Zerkleinerungsgut angepasst werden. Dies wird im Ergebnis dadurch erreicht, dass sowohl die Anzahl als auch die Anordnung der Antriebsräder veränderbar ist und den notwendigen Einsatzbedingungen angepasst werden kann.

Bei der erfindungsgemäßen Ausgestaltung ist es grundsätzlich möglich, dass die Antriebseinrichtung entweder nur an einer Seite bzw. stirnseitigem Ende der Zerkleinerungswalze oder aber an beiden Seiten bzw. beiden stirnseitigen Enden der Zerkleinerungswalze wirksam ist. Für den Fall, dass stirnseitig an beiden Seiten/Enden der Zerkleinerungswalze jeweils eine Antriebseinrichtung, die insbesondere als Reibradantrieb ausgebildet ist, vorgesehen ist, versteht es sich, dass die beiden Antriebseinrichtungen bevorzugt über eine entsprechende Steuereinrichtung und/oder Überwachungseinrichtung synchronisiert bzw. synchron betreibbar sind.

Vorzugsweise verläuft die Zentralachse der Zerkleinerungswalze zumindest im Wesentlichen parallel zur Drehachse des Antriebsrades, insbesondere wobei - wie zuvor erläutert - der Drehsinn des Antriebsrades gegenläufig zum Drehsinn der Zentralachse beim Betrieb der Zerkleinerungsvorrichtung sein kann. Dabei versteht es sich, dass die parallele Anordnung sich auf einen Zustand bezieht, wenn die erfindungsgemäße Zerkleinerungsvorrichtung entweder nicht in Betrieb ist, oder bei Niedriglast betrieben wird, sich also entweder in ihrer Ursprungsposition oder in ihrer Neutralposition befindet.

Bei einer besonders bevorzugten Ausgestaltung des Erfindungsgedankens ist vorgesehen, dass an beiden stirnseitigen Enden der Zerkleinerungswalze jeweils ein Zentralrad mit jeweils wenigstens einem zusammenwirkenden Antriebsrad angeordnet ist. Das Zentralrad ist jeweils drehsteif mit der Zerkleinerungswalze verbunden - das heißt, dass sich die Zentralräder gemeinsam mit der Zerkleinerungswalze beim Betrieb der Zerkleinerungsvorrichtung um die Zentralachse drehen.

Durch den beidseitigen Antrieb kann insbesondere das übertragene Drehmoment auf die Zerkleinerungswalze erhöht werden, insbesondere wobei die Zerkleinerungswalze unterschiedlichen Prozessaufgaben und insbesondere der Zerkleinerung von verschiedenen Arten von Zerkleinerungsgut, die im Recyclingbereich anfallen, "gewachsen" ist. Auch das Verhalten im Überlastfall kann dahingehend verbessert werden, dass, sofern sich Zerkleinerungsgut in der Zerkleinerungsvorrichtung verklemmt, durch die beidseitig angeordneten Antriebseinrichtungen ermöglicht wird, dass trotz einer - gegebenenfalls drohenden - Verklemmung eine Zerkleinerung des Zerkleinerungsgutes ein weiterer Betrieb der Zerkleinerungsvorrichtung möglich ist.

Insbesondere können die Antriebseinrichtungen zueinander symmetrisch, insbesondere zu einer mittigen Spiegelachse, bevorzugt orthogonal zu der Zentralachse, spiegelsymmetrisch zum Antrieb der Zerkleinerungswalze an der Zerkleinerungswalze angeordnet sein. Besonders bevorzugt sind die Antriebsräder an beiden stirnseitigen Enden der Zerkleinerungswalze derart zueinander paarweise angeordnet, dass die Drehachse eines ersten Antriebsrades an dem einen stirnseitigen Ende der Zerkleinerungswalze zumindest im Wesentlichen mit der Drehachse eines weiteren Antriebsrades an dem anderen stirnseitigen Ende der Zerkleinerungswalze übereinstimmt. Diese Anordnung bezieht sich letztlich auf den Normal- bzw. Nicht-Betriebszustand. Folglich kann eine symmetrische Anordnung der Antriebseinrichtungen an der Zerkleinerungswalze dahingehend verstanden werden, dass insbesondere eine gleiche Anzahl an Antriebsrädern je Antriebseinrichtung vorgesehen ist, wobei die Antriebsräder zueinander paarweise angeordnet sind und wobei die sich einander gegenüberliegenden Antriebsräder - in Bezug zu den jeweiligen stirnseitigen Enden der Zerkleinerungswalze - zumindest im Wesentlichen die gleiche Drehachse aufweisen. So können beispielsweise auf jeder Seite der erfindungsgemäßen Zerkleinerungsvorrichtung beispielsweise entweder jeweils zwei, jeweils drei oder jeweils vier Antriebsräder vorgesehen sein. Durch die vorgenannte Anordnung kann insbesondere ein synchroner bzw. gleichmäßiger Antrieb der Zerkleinerungswalze erreicht werden.

Ferner ist vorzugsweise ein dem Antriebsrad zugeordneter Antriebsmotor zum Antrieb des Antriebsrades vorgesehen. Besonders bevorzugt ist als Antriebsmotor ein hydraulischer oder elektrischer Motor vorgesehen. Letztlich kann die Auswahl des Typs des Antriebsmotors in Abhängigkeit der Anzahl der Antriebsräder und/oder der Antriebsmotoren sowie in Abhängigkeit der unterschiedlichen Prozessaufgaben der Zerkleinerungsvorrichtung erfolgen.

Vorzugsweise ist - wie zuvor erläutert - eine Mehrzahl von Antriebsrädern (je Antriebseinrichtung) vorgesehen. Demzufolge kann jeweils einem Zentralrad eine Mehrzahl von Antriebsrädern zugeordnet sein und zum Antrieb des Zentralrades zusammenwirken. Bevorzugt sind die Antriebsräder und/oder die Antriebsmotoren der Antriebsräder, bevorzugt durch eine Steuereinrichtung und/oder Überwachungseinrichtung, synchron betreibbar. Vorteilhafterweise ist jedem Antriebsrad ein eigener Antriebsmotor zugeordnet.

Vorzugsweise ist die Zentralachse und/oder die Drehachse des wenigstens einen Antriebsrades ortsfest, bevorzugt in Bezug zu einem ortsfesten Gestell der Zerkleinerungsvorrichtung, angeordnet.

Letztlich können die Antriebsräder insbesondere planetenartig um das Zentralrad herum angeordnet werden. Im Zentrum des Antriebes ist letztlich insbesondere das Zentralrad, wobei außenseitig an dem Zentralrad die Antriebsräder derart angeordnet sind, dass die Laufflächen der Antriebsräder mit der Lauffläche des Zentralrades reibschlüssig zusammenwirken und das Zentralrad damit antreiben.

Darüber hinaus ist bei einer weiteren bevorzugten Ausführungsform vorgesehen, dass die Antriebsräder an der oberen, einem Untergrund abgewandten Hälfte des Zentralrades angeordnet sind. In diesem Zusammenhang versteht es sich insbesondere, dass die vorgenannte Anordnung sich insbesondere auf den endmontierten Zustand der Zerkleinerungsvorrichtung bezieht. Der Untergrund bzw. Boden dient dabei zur Auflage der gesamten Zerkleinerungsvorrichtung.

Letztlich kann sich das Zentralrad in eine obere und untere Hälfte aufteilen, insbesondere wobei die Hälften zumindest im Wesentlichen gleich groß sind. Die Anordnung der Antriebsräder an der oberen Hälfte des Zentralrades hat den Vorteil der verbesserten Kraftübertragung auf die Zerkleinerungswalze. Der Zerkleinerungswalze wird oberseitig - d.h. an der dem Untergrund abgewandten Seite - das Zerkleinerungsgut aufgegeben, so dass insbesondere im oberen Bereich der Zerkleinerungsvorrichtung die Zerkleinerung des Zerkleinerungsgutes stattfindet und dort die entstehenden Kräfte und Momente auftreten.

Demzufolge ist die Anordnung der Antriebsräder an der oberen Hälfte des Zentralrades mit der verbesserten und optimierten Kräfte- bzw. Drehmomentübertragung an die Zerkleinerungswalze verbunden. Auch im Hinblick auf das selbstregulierende Verhalten der Zerkleinerungsvorrichtung zeigt sich hier der Vorteil, dass durch die im oberen Bereich der Zerkleinerungswalze auftretenden Prozesskräfte eine Ausweichbewegung der Zerkleinerungswalze nach oben und somit gegen die Antriebsräder durchgeführt wird.

Vorzugsweise weist die Zerkleinerungswalze eine Betriebsdrehzahl zwischen 1 bis 100 U/min, bevorzugt zwischen 10 bis 50 U/min, vorzugsweise zwischen 20 bis 25 U/min, auf.

Bei einer besonders bevorzugten Ausgestaltung ist vorgesehen, dass das Zentralrad ein flexibles Dämpfungsmittel aufweist. Insbesondere kann das Dämpfungsmittel als kreisringförmiges Dämpfungsmittel und/oder als (Rad-)Reifen ausgebildet sein. Vorzugsweise kann durch das Dämpfungsmittel eine (Ausweich-)Bewegung der Zerkleinerungswalze in axialer Richtung und/oder radialer Richtung, bevorzugt zumindest im Wesentlichen ausschließlich in radialer Richtung, der Zentralachse ermöglicht werden. Letztlich ergibt sich über das Dämpfungsmittel eine Dämpfung der Zerkleinerungswalze während des Betriebes.

Da vorzugsweise die Zerkleinerungswalze an jedem stirnseitigen Ende ein Zentralrad aufweist bzw. das Zentralrad an jedem stirnseitigen Ende der Zerkleinerungswalze angeordnet ist, ist besonders bevorzugt die Zerkleinerungswalze beidseitig gedämpft.

Über die Dämpfung der Zerkleinerungswalze bzw. über das als Dämpfungsmittel ausgebildete Zentralrad kann die Zerkleinerungswalze im Überlastfall eine Ausweichbewegung, vorzugsweise im Bereich von mehreren Millimetern, ausführen, die die auftretenden Überlastspitzen an der Zerkleinerungswalze bzw. an Zerkleinerungswerkzeugen der Zerkleinerungswalze während des Betriebes dämpfen und zum Teil deutlich verringern. Die mögliche Ausweichbewegung der Zerkleinerungswalze führt letztlich dazu, dass im Überlastfall eine Relativbewegung zwischen dem die Überlast hervorrufenden "problematischen" Zerkleinerungsgut und den Zerkleinerungswerkzeugen möglich ist, so dass die hohen Überlastspitzen, wie sie beim Stand der Technik mit einer starren Lagerung auftreten, bei der Erfindung vermieden werden können.

Vorzugsweise sind die Zerkleinerungswerkzeuge zumindest im Wesentlichen unmittelbar an der Zerkleinerungswalze bzw. am Walzenkörper der Zerkleinerungswalze angeordnet und befestigt.

Die Dämpfung ist darüber hinaus mit dem Vorteil verbunden, dass Beschädigungen oder gar eine Zerstörung der Antriebseinrichtung zumindest im Wesentlichen ausgeschlossen, die gesamte Anlage zudem aber auch deutlich leiser betrieben werden kann, so dass die Lärmbelästigung des Bedienpersonals und der Umgebung weitgehend reduziert wird.

Gleichzeitig verbessert das Dämpfungsmittel des Zentralrades auch das selbstregulierende Verhalten der Antriebseinrichtung im Lastfall bzw. im Überlastfall, da die Zerkleinerungswalze gemeinsam mit dem Zentralrad eine Ausweichbewegung durchführt, die wiederum dazu führt, dass das Antriebsrad auf die Außenseite des Zentralrades stärker gedrückt wird und somit eine verbesserte bzw. erhöhte Übertragung der Kräfte/Drehmomente erreicht werden kann. Dies wird letztlich durch den Reibschluss zwischen dem Zentralrad und dem Antriebsrad ermöglicht. Insbesondere kann das Antriebsrad auf der (peripheren) Außenseite des Dämpfungsmittels angreifend angeordnet sein. Letztlich läuft die Lauffläche des Antriebsrades auf der Lauffläche des Zentralrades bzw. des Dämpfungsmittels unter Erzeugung eines Reibschlusses ab.

Durch die vorgenannte Ausgestaltung kann insbesondere sichergestellt werden, dass die Zerkleinerungswalze in X-, Y- und Z-Richtung ausweichen kann, also die Dämpfung letztlich insbesondere in allen Richtungen möglich ist.

Bei der erfindungsgemäßen Ausgestaltung ist es grundsätzlich auch möglich, dass die Antriebseinrichtung nur an einer Seite der Zerkleinerungswalze angeordnet ist, wobei die Zerkleinerungswalze dann nur einseitig gedämpft ist. Bevorzugt ist jedoch, dass je eine Antriebseinrichtung an beiden Seiten der Zerkleinerungswalze wirksam ist, insbesondere wobei die Zerkleinerungswalze beidseitig gedämpft ist - wie zuvor erläutert. Die erfindungsgemäße Ausgestaltung ermöglicht insbesondere, dass die Zerkleinerungswalze notwendige Ausweichbewegungen zur Vermeidung von Überlastspitzen und zum Schutz der Zerkleinerungswerkzeuge ohne Weiteres durchführen kann.

Insbesondere kann das Dämpfungsmittel in Art eines Radreifens ausgebildet sein. Die Elastizität bzw. Steifigkeit des Dämpfungsmittels ergibt sich dann durch eine entsprechende Materialwahl, die jedenfalls insbesondere einen flexiblen Kunststoff, Gummi, Kautschuk oder Mischungen davon aufweist. Bei dem Radreifen kann es sich grundsätzlich um einen Vollgummireifen oder um einen mit Druckluft befüllbaren Reifen handeln. Jedenfalls sollte bei Verwendung je einer Antriebseinrichtung an jeder Seite der Zerkleinerungswalze darauf geachtet werden, dass das Dämpfungsmittel der jeweiligen Antriebseinrichtung gleich ist. Auf diese Weise werden unnötige Schwingungen und ein ungleiches Laufverhalten vermieden.

Wenngleich es grundsätzlich vorteilhaft ist, möglichst große Ausweichbewegungen zuzulassen, um eine gute Dämpfungswirkung der Dämpfungseinrichtung zu erreichen, ist dennoch bevorzugt, die Ausweichbewegung bei der Dämpfung auf einen Maximalwert zu beschränken. Hintergrund ist, dass üblicherweise an der Zerkleinerungswalze eine Mehrzahl von Zerkleinerungswerkzeugen vorgesehen ist. Diese wirken letztlich mit einem korrespondierenden Gegenkamm, der unmittelbar oder mittelbar am Gestell befestigt ist, zusammen. Bei den Werkzeugen handelt es sich um am äußeren Mantel der Zerkleinerungswalze vorgesehene bzw. am Walzenkörper der Zerkleinerungswalze befestigte Messer oder Zähne, die über den Walzenmantel überstehen. Zu den Zerkleinerungswerkzeugen an der Zerkleinerungswalze korrespondiert der Gegenkamm, der Zähne mit entsprechenden Freiräumen aufweist. Durch die Freiräume am Gegenkamm werden die Zerkleinerungswerkzeuge bei der Rotation der Zerkleinerungswalze hindurchgeführt.

Üblicherweise befindet sich zwischen den Zähnen bzw. Vorsprüngen des Gegenkamms und den Zerkleinerungswerkzeugen ein Spalt bzw. ein Spiel von kleiner 1 cm, in der Regel im Bereich zwischen 3 mm und 6 mm. Dementsprechend würden zu große Ausweichbewegungen der Baugruppe mit der Zerkleinerungswalze dazu führen, dass die Zerkleinerungswerkzeuge mit dem Gegenkamm kollidieren, was zu einer nachhaltigen Störung des Zerkleinerungsprozesses oder gar Beschädigung der Zerkleinerungsvorrichtung führen könnte. In diesem Zusammenhang ist erfindungsgemäß bevorzugt vorgesehen, dass die axiale und/oder radiale Ausweichbewegung der Zerkleinerungswalze durch die Anordnung der Antriebsräder an der Außenoberfläche des Dämpfungsmittels des Zentralrades begrenzt wird. Dabei versteht es sich insbesondere, dass die Antriebsräder derart angreifend an der (peripheren) Außenoberfläche des Dämpfungsmittels angeordnet sind, dass zwar grundsätzlich eine Bewegung der Zerkleinerungswalze gemeinsam mit dem Zentralrad möglich ist, dass diese Bewegung vorzugsweise jedoch maximal dem Spaltmaß zwischen den Zerkleinerungswerkzeugen und dem Gegenkamm entspricht. Bevorzugt ist die Anordnung der Antriebsräder an dem Dämpfungsmittel derart vorgesehen, dass sich eine Begrenzungs- bzw. Anschlagfunktion spätestens dann ergibt, wenn das Spaltmaß bzw. der Abstand zwischen den Zerkleinerungswerkzeugen und dem Gegenkamm bei Rotation der Walze auf maximal 1 mm verringert hat.

Vorzugsweise weist das Zentralrad ein mit der Zerkleinerungswalze fest verbundenes Scheibenrad auf. Im Sinne der vorliegenden Erfindung wird unter dem Scheibenrad insbesondere sowohl die Felge als auch die Radschüssel bzw. Radscheibe des Zentralrades verstanden. Insbesondere dient das Scheibenrad zur Stabilisierung des Zentralrades und letztlich auch zur Kraftübertragung an die Zerkleinerungswalze. Das Scheibenrad ist insbesondere drehsteif mit der Zerkleinerungswalze, insbesondere mit dem stirnseitigen Ende der Zerkleinerungswalze, verbunden. Das Dämpfungsmittel des Zentralrades kann außenseitig an dem Scheibenrad angeordnet sein. So kann das Scheibenrad insbesondere zur Aufnahme des Dämpfungsmittels, das bevorzugt ein Reifen bzw. Radreifen ist, ausgebildet sein.

Insbesondere sind Stützräder an beiden stirnseitigen Enden der Zerkleinerungswalze - das heißt sofern jeweils eine Antriebseinrichtung an jedem stirnseitigen Ende der Zerkleinerungswalze angeordnet ist - vorgesehen, die - wie die Antriebsräder auch -, bevorzugt spiegelsymmetrisch auf gegenüberliegenden Seiten des Gestells angeordnet sind. Bevorzugt sind die Stützräder derart zueinander paarweise angeordnet, dass die Mittelachse eines ersten Stützrades an dem einen stirnseitigen Ende der Zerkleinerungswalze zumindest im Wesentlichen mit der Mittelachse eines weiteren Stützrades an dem anderen stirnseitigen Ende der Zerkleinerungswalze übereinstimmt. Bevorzugt gilt diese Anordnung für alle Stützräder.

Somit kann insbesondere eine symmetrische Anordnung der jeweiligen Stützräder vorgesehen sein. Ferner kann vorgesehen sein, dass beide Antriebseinrichtungen (an jedem stirnseitigen Ende) die gleiche Anzahl an Stützrädern aufweisen, die zueinander die vorgenannte paarweise symmetrische Anordnung aufweisen können.

Besonders bevorzugt wird das Stützrad nicht angetrieben. Das Stützrad kann insbesondere durch das reibschlüssige bzw. kraftschlüssige Zusammenwirken mit dem Zentralrad drehbar sein.

Ferner ist - wie zuvor erläutert - bei einer weiteren bevorzugten Ausführungsform eine, insbesondere geradzahlige, Mehrzahl von Stützrädern, insbesondere je Antriebseinrichtung, vorgesehen. Besonders bevorzugt sind die Stützräder an der unteren, dem Untergrund zugewandten Hälfte des Zentralrades angeordnet.

Demnach ist bei einer besonders bevorzugten Ausführungsform vorgesehen, dass die Antriebsräder im Bereich der oberen Hälfte des Zentralrades und die Stützräder im Bereich der unteren Hälfte des Zentralrades angeordnet sind und jeweils auf der Lauffläche des Zentralrades ablaufen können. Je Antriebseinrichtung kann sich die Anzahl der Stützräder von der Anzahl der Antriebsräder unterscheiden.

Bevorzugt sind je Antriebseinrichtung 2, 3, 4 oder 6 Antriebsräder und/oder 2, 3, 4 oder 6 Stützräder vorgesehen. Grundsätzlich kann die Anzahl der Antriebsräder oder der Stützräder auch variiert werden.

Dabei kann die erfindungsgemäße Zerkleinerungsvorrichtung derart ausgebildet sein, dass die Anzahl der Antriebsräder und/oder der Stützräder und deren jeweilige Platzierung bzw. Befestigung am Gestell je nach Anwendungsfall variiert werden kann. Bedarfsweise können also mehr oder weniger Antriebsräder und/oder Stützräder zum Einsatz kommen. Um ein gutes Laufverhalten während des Betriebes der erfindungsgemäßen Zerkleinerungsvorrichtung zu erzielen, bietet es sich aber in jedem Falle an, die gleiche Anzahl von Antriebsrädern und/oder Stützrädern auf jeder Seite des Gestells vorzusehen, und zwar insbesondere derart, dass sich eine spiegelsymmetrische Anordnung ergibt.

Zudem weist bei einer weiteren bevorzugten Ausführungsform des Erfindungsgedankens das Antriebsrad und/oder das Stützrad ein, insbesondre kreisringförmiges und/oder als Reifen, insbesondere Radreifen, ausgebildetes, flexibles weiteres Dämpfungsmittel auf. Bei Verwendung von Radreifen kann es sich wiederum um Vollmantel oder aber auch um mit Druckluft befüllte Reifen handeln. Jedenfalls kann durch das weitere Dämpfungsmittel eine Bewegung des Zentralrades und/oder der Zerkleinerungswalze in axialer Richtung und/oder in radialer Richtung, bevorzugt zumindest im Wesentlichen ausschließlich in radialer Richtung, der Zentralachse ermöglicht werden. Demzufolge kann eine Dämpfung der Zerkleinerungswalze alternativ oder zusätzlich auch über das wenigstens eine Antriebsrad und/oder das wenigstens eine Stützrad erfolgen. In diesem Zusammenhang versteht es sich, dass bevorzugt alle Antriebsräder und/oder alle Stützräder ein flexibles weiteres Dämpfungsmittel aufweisen.

Das flexible weitere Dämpfungsmittel geht insbesondere mit den zuvor genannten Vorteilen der Dämpfung der Zerkleinerungswalze einher. Die Dämpfung kann somit auch über das Antriebsrad und/oder das Stützrad erreicht werden. Dies gilt insbesondere für den Fall, dass das Zentralrad kein Dämpfungsmittel aufweist.

In diesem Zusammenhang versteht es sich, dass zum einen vorgesehen sein kann, dass sowohl das Zentralrad ein Dämpfungsmittel als auch das Antriebsrad und/oder das Stützrad ein weiteres Dämpfungsmittel aufweist. Dies ergibt eine gegenüber dem Stand der Technik deutlich verbesserte Dämpfung der Zerkleinerungswalze.

Zum anderen kann bei einer alternativen Ausführungsform jedoch auch vorgesehen sein, dass entweder das Zentralrad ein Dämpfungsmittel oder das Antriebsrad und/oder das Stützrad ein weiteres flexibles Dämpfungsmittel aufweist. Somit kann die Dämpfung der Zerkleinerungswalze entweder durch das Zentralrad oder durch das Antriebsrad bzw. das Stützrad erreicht werden. Bei dieser alternativen Ausführungsform kann vorgesehen sein, dass das Zentralrad nicht elastisch bzw. nicht dämpfend ausgebildet ist und insbesondere eine steife Trommelscheibe mit einer festen Lauffläche, bevorzugt einer zylinderförmigen Lauffläche, zum Angreifen des Antriebsrades aufweist. Bei dieser Ausführungsform weist bevorzugt das Antriebsrad und/oder das Stützrad ein weiteres Dämpfungsmittel auf und ermöglicht somit die Dämpfung der Zerkleinerungswalze. Die Namensgebung "weiteres" Dämpfungsmittel dient bei dieser Ausführungsform zur Unterscheidung zu dem bei anderen Ausführungsformen vorgesehenen Dämpfungsmittel des Zentralrades.

Bei der Ausbildung als steife Trommelscheiben kann vorgesehen sein, dass die Außenfläche profiliert ist bzw. eine Mantel- oder Lauffläche mit einem entsprechenden Profil aufweisen kann.

Ebenfalls kann bei einer weiteren Ausführungsform vorgesehen sein, dass nur das Antriebsrad oder nur das Stützrad ein weiteres flexibles Dämpfungsmittel aufweisen kann. Grundsätzlich kann natürlich auch das Antriebsrad und/oder das Stützrad steif ausgebildet sein und insbesondere eine steife Trommelscheibe aufweisen.

Des Weiteren können bei einer alternativen Ausführungsform sowohl das Antriebsrad als auch das Stützrad ein weiteres Dämpfungsmittel aufweisen.

Die vorgenannten unterschiedlichen Möglichkeiten der Dämpfung verdeutlichen, dass, insbesondere in Abhängigkeit des zu zerkleinernden Zerkleinerungsgutes, eine individuelle Anpassbarkeit der Dämpfung gegeben ist.

Ferner kann das Dämpfungsmittel und/oder das weitere Dämpfungsmittel als ein mit einem Medium befüllbare Hohlkörper oder als Vollkörper in einem elastomeren Material ausgebildet sein. Die vorgenannte Ausbildung des Dämpfungsmittels bzw. des weiteren Dämpfungsmittels ermöglicht ein elastisch nachgebendes Verhalten des Dämpfungsmittels bzw. des weiteren Dämpfungsmittels und somit eine Dämpfung der Zerkleinerungswalze.

Das Dämpfungsmittel und/oder das weitere Dämpfungsmittel kann mit Druckluft befüllt sein.

Darüber hinaus kann bevorzugt zur Erhöhung des Reibschlusses zwischen dem Zentralrad und dem Antriebsrad das Zentralrad auf seiner (peripheren) Außenseite bzw. seiner Lauffläche eine Profilierung, bevorzugt ein Fischgrätenprofil, aufweisen.

Alternativ oder zusätzlich kann das Antriebsrad und/oder das Stützrad auf seiner Außenseite eine weitere Profilierung aufweisen. Darüber hinaus kann vorgesehen sein, dass sich die weitere Profilierung des Antriebsrades bzw. des Stützrades von der Profilierung des Zentralrades unterscheidet, und zwar derart, dass ein Eingreifen der Profilierung in die weitere Profilierung oder umgekehrt bzw. ein Formschluss zwischen der Profilierung und der weiteren Profilierung nicht auftritt. Letztlich sollen die Profilierung und die weitere Profilierung so ausgebildet sein, dass sich bevorzugt ausschließlich ein Reibschluss zwischen den zusammenwirkenden Rädern ergibt.

Bevorzugt weisen das Dämpfungsmittel des Zentralrades und das weitere Dämpfungsmittel des Antriebsrades bzw. des Stützrades auf ihren Außenseiten jeweils eine Profilierung auf. Insbesondere sind die Profilierungen des Zentralrades und des Antriebsrades bzw. des Stützrades derart ausgebildet, dass zwischen der Außenseite des Antriebsrades bzw. des Stützrades und der Außenseite des Zentralrades, insbesondere die jeweiligen Außenseiten der Dämpfungsmittel, kein Formschluss zwischen dem Zentralrad und dem Antriebsrad bzw. dem Stützrad erfolgen kann, insbesondere so dass zum Antrieb des Zentralrades jeweils ein Reibschluss zwischen Antriebsrad und Zentralrad vorgesehen ist.

Vorzugsweise ist ein Gestell zur Halterung und/oder Lagerung der Zerkleinerungswalze und der Antriebseinrichtung und/oder der Antriebseinrichtungen vorgesehen. Besonders bevorzugt sind das Zentralrad, das Antriebsrad und/oder das Stützrad derart am Gestell gehalten und befestigt, dass sich eine drehbare Lagerung des jeweiligen Rades ergibt.

Das Gestell kann einen Aufnahmeraum zur Anordnung der Zerkleinerungswalze aufweisen. Die Zerkleinerungswalze kann insbesondere zumindest bereichsweise von dem Gestell umgeben sein. Darüber hinaus kann das Gestell äußere Stirnwandungen und/oder äußere Seitenwandungen zur Begrenzung des Aufnahmeraums aufweisen. Die äußeren Stirnwandungen des Gestells können insbesondere den Stirnseiten der Zerkleinerungswalze zugewandt sein. Zudem können die äußeren Seitenwandungen sich in Längsrichtung der Zerkleinerungswalze erstrecken. Das Gestell ist zum Aufsetzen auf den Untergrund ausgebildet. Bedarfsweise können Verstellmittel zur Erzielung einer waagerechten Anordnung vorgesehen sein. Ferner kann das Gestell als geschlossener Kasten angesehen werden.

Vorzugsweise kann das Gestell ein dem Untergrund zugewandtes Unterteil und ein schwenkbar an dem Unterteil angelenktes Oberteil aufweisen. Das Oberteil kann bevorzugt zum Eingriff und zur Entnahme der Zerkleinerungswalze gegenüber dem Unterteil aufgeschwenkt werden, so dass insbesondere ein Zugang zu der Zerkleinerungswalze ermöglicht werden kann. Bevorzugt wird das Oberteil an dem Unterteil über wenigstens eine Verriegelungseinrichtung verriegelt. In diesem Zusammenhang versteht es sich, dass das Oberteil des Gestells auch äußere Stirnwandungen und/oder äußere Seitenwandungen oder Teile bzw. Abschnitte von diesen Wandungen aufweisen kann.

Insbesondere ist das Gestell in zumindest im Wesentlichen zwei Teile aufgeteilt, so dass beispielsweise die äußeren Stirnwandungen und/oder die äußeren Seitenwandungen des Gestells ebenfalls zweigeteilt ausgebildet sein können.

Zum Ein- und/oder Ausbau der Zerkleinerungswalze kann das Oberteil des Gestells insbesondere mittels einer Kranhilfe ein- bzw. ausgebaut und ersetzt werden - das heißt der Umbau der Maschine kann für Verschleißteil-Austausch, Reparaturen oder Umbau für andere verfahrenstechnische Aufgaben sehr anwendungsfreundlich durchgeführt werden, insbesondere auch unter Arbeitsfeldumgebungen mit Verschmutzungen oder ähnlichem einfach und zügig durchgeführt werden.

Bei einer weiteren bevorzugten Ausführungsform ist an der der Zerkleinerungswalze zugewandten Seitenfläche des Zentralrades eine Seitenplatte angeordnet. Die Seitenplatte kann dem Zentralrad derart zugeordnet sein, dass die Seitenplatte nicht wesentlich - das heißt insbesondere nicht mehr als 80 cm, bevorzugt höchstens 50 cm - über das Zentralrad hinausragt bzw. das Zentralrad ist gegenüber den äu-ßeren Rand der Seitenplatte in radialer Richtung zurückversetzt.

Insbesondere grenzt die Seitenplatte an dem Scheibenrad und/oder an der Seitenfläche des Dämpfungsmittels des Zentralrades zumindest mittelbar an.

Alternativ oder zusätzlich kann die Seitenplatte wenigstens bis zum Außendurchmesser des Zentralrades, insbesondere des Dämpfungsmittels des Zentralrades, ragen. Bevorzugt ist die Seitenplatte drehsteif mit der Zerkleinerungswalze verbunden bzw. drehsteif an der Zerkleinerungswalze angeordnet. Die Seitenplatte dreht sich also während des Betriebes der Zerkleinerungsvorrichtung zusammen mit der Zerkleinerungswalze und auch dem Zentralrad.

Vorzugsweise ist die Seitenplatte an einer, insbesondere zwischen den äußeren Stirnwandungen angeordneten, weiteren Wandung des Gestells angrenzend angeordnet. Die weitere Wandung des Gestells ist bevorzugt nicht drehsteif mit der Zerkleinerungswalze verbunden und somit insbesondere ortsfest an dem Gestell angeordnet. Insbesondere kann die Seitenplatte von dem Zentralrad und/oder von dem Dämpfungsmittel über die weitere Wandung beabstandet sein.

Letztlich dient die weitere Wandung insbesondere zur Abgrenzung des Prozessraums, in dem die Zerkleinerung stattfindet. Die weitere Wandung des Gestells sowie die Seitenplatte können insbesondere zum Schutz des Zentralrades und insbesondere des Dämpfungsmittels ausgebildet sein, so dass dieses während des Zerkleinerungsbetriebes nicht von Zerkleinerungsgut oder bereits zerkleinertem Material beschädigt wird. Somit kann die weitere Wandung und/oder die Seitenplatte letztlich vorteilhafterweise als Schild angesehen werden.

Das Zentralrad kann insbesondere zwischen der weiteren Wandung und der äußeren Stirnwandung des Gestells angeordnet sein. Zwischen der weiteren Wandung und der äußeren Stirnwandung kann somit ein Aufnahmeraum für das Zentralrad gebildet werden.

Die Zerkleinerungswalze kann insbesondere in dem zwischen den weiteren Wandungen gebildeten Prozessraum angeordnet sein.

Vorzugsweise ist zwischen der weiteren Wandung und der Seitenplatte eine Labyrinthdichtung vorgesehen. Zur Ausbildung der Labyrinthdichtung kann die Seitenplatte nach außen gerichtete - das heißt vom Mittelpunkt der Seitenplatte wegweisende - Spiralkufen bzw. Spiralrippen aufweisen. Diese Spiralkufen bzw. Spiralrippen können eine gebogene, bevorzugt bogenabschnittsförmige, Form aufweisen, insbesondere so dass Schmutz erneut in den Prozessraum zurückgefördert wird. Die Spiralkufen bzw. Spiralrippen können eine Höhe von wenigen Millimetern, insbesondere zwischen 1 bis 50 mm, weiter bevorzugt zwischen 1 bis 10 mm, aufweisen.

Die Labyrinthdichtung kann somit zwischen der weiteren Wandung, die insbesondere als glatte Scheibe aufgeführt ist und als Teil des (stillstehenden) Gehäuses bzw. Gestells angesehen werden kann, und der Seitenplatte mit den Spiralkufen gebildet werden. Die Seitenplatte kann mit der Zerkleinerungswalze fest verbunden, insbesondere verschweißt, sein. Die Spiralkufen bzw. Spiralrippen sind insbesondere gegen den Drehsinn der Zerkleinerungswalze nach außen gebogen, insbesondere so dass Schmutz radial nach außen bzw. in den Prozessraum gefördert wird und insbesondere nicht in den Bereich der Antriebseinrichtung gelangen kann.

Insbesondere kann die Labyrinthdichtung, die auch als Spaltdichtung bezeichnet werden kann, als berührungsfreie Wellendichtung angesehen werden.

Bei einer weiteren bevorzugten Ausführungsform des Erfindungsgedankens ist an der der Zerkleinerungswalze abgewandten Seitenfläche des Zentralrades, insbesondere des Dämpfungsmittels des Zentralrades, eine weitere Seitenplatte angeordnet. Die weitere Seitenplatte ist insbesondere drehsteif mit dem Zentralrad, insbesondere dem Scheibenrad des Zentralrades, verbunden.

Die weitere Seitenplatte kann insbesondere von den äußeren Abmessungen symmetrisch zur Seitenplatte ausgebildet sein.

Besonders bevorzugt ist, dass die weitere Seitenplatte nicht wesentlich über das Zentralrad hinausragt - insbesondere um höchstens 50 cm, bevorzugt höchstens 20 cm. Insbesondere ragt die weitere Seitenplatte jedoch wenigstens bis zum Außendurchmesser des Zentralrades, insbesondere des Dämpfungsmittels des Zentralrades. Die weitere Seitenplatte kann vorteilhafterweise angrenzend an der äußeren Stirnwandung des Gestells angeordnet sein. Bevorzugt ist jedoch die weitere Seitenplatte nicht mit der äußeren Stirnwandung des Gestells drehsteif bzw. ortsfest verbunden. Die weitere Seitenplatte kann insbesondere das Zentralrad schützen.

Bevorzugt ist dem Antriebsrad eine Antriebswelle zugeordnet, die durch einen Durchbruch der äußeren Stirnwandung des Gestells geführt ist. Die Antriebswelle führt in den Antriebsmotor des Antriebsrades und verbindet das Antriebsrad mit dem Antriebsmotor. Dabei ist die Antriebswelle drehsteif mit dem Antriebsrad und dem Antriebsmotor verbunden.

Das Antriebsrad kann von dem Antriebsmotor durch die äußere Stirnwandung des Gestells beabstandet sein. Letztlich ist der Antriebsmotor außenseitig am Gestell bzw. der äußeren Stirnwandung des Gestells angeordnet und dort befestigt, während das Antriebsrad sich im Inneren des Gestells befindet.

Bei einer alternativen Ausführungsform kann auch vorgesehen sein, dass der Antriebsmotor im Inneren des Gestells angeordnet ist.

Vorzugsweise ist der Durchbruch für die Antriebswelle des Antriebsrades als Langloch zur Verstellung der Position des Antriebsrades in radialer Richtung der Zentralachse ausgebildet. Ein als Langloch ausgebildeter Durchbruch wird insbesondere nachfolgend so verstanden, dass zumindest ein Anteil der ermöglichten Bewegung in radialer Richtung der Zentralachse erfolgen kann.

Letztlich kann es für eine Verstellung der Position des Antriebsrades erforderlich sein, dass auch die Antriebswelle verstellt wird. Da diese jedoch durch die äußere Stirnwandung und durch den Durchbruch geführt werden muss, ist eine eine solche Bewegung zulassende Form des Durchbruches erforderlich. Dies wird beispielsweise durch das zuvor genannte Langloch realisiert.

Grundsätzlich können auch unterschiedliche Ausbildungen des Durchbruches vorgesehen sein, insbesondere sofern eine Verstellung der Position des Antriebsrades mit einem Anteil in radialer Richtung der Zentralachse ermöglicht werden kann. Eine solche Ausgestaltung des Durchbruches wird erfindungsgemäß als "Langloch" angesehen.

Das Antriebsrad kann in seiner Position verstellt werden, um insbesondere einen erhöhten Anpressdruck auf das Zentralrad und somit eine verbesserte Drehmomentübertragung zu gewährleisten. Eine solche Erhöhung des Anpressdruckes kann demzufolge vorgegeben und durch die Ausbildung des Durchbruches als Langloch auch konstruktionstechnisch gewährleistet werden.

Vorzugsweise weist das Stützrad eine einen weiteren Durchbruch der äußeren Stirnwandung überbrückende Stützachse auf. Die äußere Stirnwandung kann sowohl Durchbrüche für die Antriebswellen der Antriebsräder und weitere Durchbrüche für die Stützachsen der Stützräder aufweisen. Die Stützachse kann zumindest mittelbar drehsteif und/oder ortsfest mit dem Gestell verbunden sein. Vorzugsweise kann sich das Stützrad an der Stützachse abstützen und an dieser drehbar gelagert sein. Die Stützachse kann darüber hinaus auch das Stützrad mit dem Gestell, insbesondere der äußeren Stirnwandung des Gestells, verbinden.

Bei einer besonders bevorzugten Ausführungsform des Erfindungsgedankens ist eine Mehrzahl von Durchbrüchen und/oder weiteren Durchbrüchen zur bedarfsweisen Anordnung und/oder zur Anpassung der Anzahl und/oder zum Positionswechsel des Antriebsrades bzw. des Stützrades vorgesehen. Insbesondere kann die Anzahl der Durchbrüche und/oder der weiteren Durchbrüche die Anzahl der eingesetzten Antriebswellen bzw. Stützachsen je äußerer Stirnwandung des Gestells und je Antriebseinrichtung übersteigen. Die Vielzahl der Durchbrüche ermöglicht letztlich eine variable Anordnung der einzelnen Räder je nach Anwendungsfall.

Durch die erhöhte Anzahl der Durchbrüche bzw. der weiteren Durchbrüche kann ein Positionswechsel des Antriebsrades bzw. des Stützrades erfolgen. Ein solcher Positionswechsel kann eine Anpassung der Zerkleinerungsvorrichtung an unterschiedliche Prozessaufgaben und/oder an unterschiedliches Zerkleinerungsgut ermöglichen. So kann/können die Antriebseinrichtung(en) in Abhängigkeit des Betriebs der Zerkleinerungsvorrichtung und der zu erwartenden Belastung der Zerkleinerungswalze angepasst werden. Die ermöglicht eine flexible und individuelle Ausgestaltung der Antriebseinrichtung(en).

Besonders bevorzugt sind die Antriebsräder und/oder die Stützräder in festen Positionen mit Vorspannung montiert. Alternativ oder zusätzlich kann auch vorgesehen sein, dass die Vorspannung durch nachträgliches Aufpumpen bzw. Erhöhung der Steifigkeit des Dämpfungsmittels des Zentralrades erzeugt wird. Bei einer weiteren erfindungsgemäßen Ausgestaltung kann die benötigte Vorspannung für die Antriebsräder bzw. die Stützräder durch weitere zusätzliche Einrichtungen erzeugt werden.

Besonders bevorzugt ist das Antriebsrad und/oder das Stützrad, vorzugsweise sowohl das Antriebsrad als auch das Stützrad, über ein an der Antriebswelle bzw. der Stützachse angeordnetes Verspannmittel gegen das Zentralrad verspannbar. Als Verspannmittel kann insbesondere eine Gewindespindel und/oder Zugspindel vorgesehen sein. Die Verspannung gegen das Zentralrad kann insbesondere in radialer Richtung der Zentralachse erfolgen. Letztlich kann die Position des Antriebsrades und/oder des Stützrades über das Verspannmittel fixiert werden.

Darüber hinaus kann alternativ oder zusätzlich vorgesehen sein, dass das Antriebsrad bzw. die Antriebswelle und/oder das Stützrad bzw. die Stützachse in wenigstens einer Linearführungseinheit - bevorzugt gegen das Zentralrad verspannbar - zumindest mittelbar gelagert sind. Die Linearführungseinheit kann eine Zustellspindel aufweisen, insbesondere für die radiale Zustellfunktion.

Alternativ oder zusätzlich kann auch vorgesehen sein, dass das Antriebsrad bzw. die Antriebswelle und/oder das Stützrad bzw. die Stützachse, bevorzugt sowohl das Antriebsrad als auch das Stützrad, in einer Exzenter-Lagerungseinheit zur Verstellung in der Position des Antriebsrades bzw. des Stützrades in radialer Richtung der Zentralachse gelagert ist/sind. So können die Antriebsräder und/oder die Stützräder radialbeweglich zur Zentralachse in einer Exzenter-Lagerungseinheit angeordnet sein.

Bei einer weiteren bevorzugten Ausführungsform ist vorgesehen, dass die Antriebswelle und/oder die Stützachse in einem Schiebesitz zur Verstellung der Position des Antriebsrades bzw. des Stützrades in radialer Richtung der Zentralachse gelagert ist/sind. Demnach kann das Antriebsrad und/oder das Stützrad zumindest mittelbar in einem Schiebesitz gelagert sein. Der Schiebesitz kann eine radial bewegliche Anordnung des Antriebsrades und/oder des Stützrades in Bezug zur Zentralachse ermöglichen.

Insbesondere versteht es sich erfindungsgemäß, dass bei einer Mehrzahl von Antriebsrädern und/oder Stützrädern unterschiedliche Lagerungen für die Antriebsräder und/oder Stützräder vorgesehen sein können. So kann ein Antriebsrad bzw. eine Antriebswelle in einem Schiebesitz und ein weiteres Antriebsrad bzw. eine weitere Antriebswelle in einer Exzenter-Lagerungseinheit gelagert sein. Alternativ oder zusätzlich können unterschiedliche Typen von Lagerungen/Verspannungen für die Antriebsräder und/oder Stützräder für die unterschiedlichen Antriebseinrichtungen vorgesehen sein. Beispielsweise können die Antriebsräder bzw. Antriebswellen in der einen Antriebseinrichtung in Exzenter-Lagerungseinheiten gelagert sein und die Antriebsräder bzw. Antriebswellen in der anderen Antriebseinrichtung mittels Verspannmittel gegen das Zentralrad verspannt werden.

Bei einer weiteren bevorzugten Ausführungsform ist vorgesehen, dass die an den Antriebsrädern angeordneten Antriebswellen, bevorzugt gemeinsam mit den an den Stützrädern angeordneten Stützachsen, über ein Spannmittel zur Vorspannung der Antriebsräder, bevorzugt gemeinsam mit den Stützrädern, gegen das Zentralrad verbunden sind. Das Spannmittel kann insbesondere als Umschlingungsmittel angesehen werden. Vorzugsweise ist das Spannmittel als Gliederkette und/oder als Spannseil ausgebildet. Die Vorspannung wird insbesondere in radialer Richtung der Zentralachse erzeugt. Dies ist erfindungsgemäß mit dem Vorteil verbunden, eine technisch einfache Realisierung der Vorspannung zu erreichen. Als Spannmittel kann auch ein Stahlseil, Gliederelement und/oder Kette verwendet werden. Das Spannmittel ermöglicht gleichzeitig sowohl die Antriebsräder als auch die Stützräder gegen das Zentralrad vorzuspannen. Insbesondere wird bei dieser Ausführungsform ebenfalls eine Zugspindel für die statische Vorspannung und gegebenenfalls ein Dämpfungselement, insbesondere ein elastisches Federelement, eingesetzt. Vorzugsweise kann diese Ausführungsform demnach mit der Lagerung/Vorspannung wenigstens eines Antriebsrades bzw. wenigstens einer Antriebswelle und/oder wenigstens eines Stützrades bzw. wenigstens einer Stützachse in einer Exzenter-Lagerungseinheit, in einem Schiebesitz und/oder mit der Anordnung an ein Vorspannmittel kombiniert werden.

Bei einer weiteren bevorzugten Ausgestaltung ist wenigstens eine Stützeinrichtung an der weiteren Seitenplatte zur Abstützung und/oder Begrenzung der Bewegung des Zentralrades und/oder der Zerkleinerungswalze in axialer Richtung der Zentralachse vorgesehen. Bevorzugt sind zwei Stützeinrichtungen, insbesondere einander gegenüberliegend, an der weiteren Seitenplatte vorgesehen. Insbesondere weist die wenigstens eine Stützeinrichtung eine sich an der Außenseite der weiteren Seitenplatte abrollende und/oder drehbare Stützrolle auf. Alternativ oder zusätzlich kann vorgesehen sein, dass die Stützeinrichtung an der äußeren Stirnwandung des Gestells befestigt ist. Letztlich kann die Stützeinrichtung kraftschlüssig auf die weitere Seitenplatte zur Abstützung des Zentralrades einwirken. Durch die Stützeinrichtung kann insbesondere die axiale Position des Zentralrades bestimmt und/oder abgestützt werden.

Vorzugsweise ist die Stützrolle ein Vollkörper, vorzugsweise ein Polyurethan aufweisendes Rad.

Vorzugsweise ist eine Überwachungseinrichtung zur Detektion eines Überlastfalls vorgesehen. Insbesondere weist die Überwachungseinrichtung eine Messeinrichtung zur Messung der Drehzahl der Zerkleinerungswalze und/oder des Drehmomentes wenigstens eines Antriebsmotors eines Antriebsrades, bevorzugt aller Antriebsmotoren, auf. Durch die Überwachungseinrichtung kann rechtzeitig festgestellt werden, ob und gegebenenfalls wann ein Lastfall und insbesondere ein Überlastfall eintritt.

Vorzugsweise ist die Überwachungseinrichtung dazu eingerichtet, dass sie eine kontinuierliche Überwachung der Betriebssituation der Zerkleinerungsvorrichtung ermöglicht.

Ein Überlastfall ist insbesondere dann gegeben, wenn die Zerkleinerungswalze droht, sich festzusetzen, bzw. wenn sich die Drehzahl der Zerkleinerungswalze droht, derart zu verringern, dass ein Stillstand der Zerkleinerungswalze absehbar ist. Ein solcher Überlastfall tritt insbesondere dann ein, wenn sich Aufgabegut in der Zerkleinerungsvorrichtung verklemmt und/oder aufgewickelt hat und somit - zumindest mittelbar - die weitere Drehung der Zerkleinerungswalze bei der Zerkleinerung blockiert wird.

Die Betriebssituation der Zerkleinerungsvorrichtung lässt sich insbesondere in drei wesentliche Fälle gliedern, nämlich in die Regelbetriebssituation, die Lastsituation und den Überlastfall. In der Regelbetriebssituation wird die Zerkleinerungswalze von der Antriebseinrichtung bzw. den Antriebseinrichtungen angetrieben und die Zerkleinerungsvorrichtung zerkleinert das Zerkleinerungsgut bzw. Aufgabegut. In der Lastsituation ist weiter eine Zerkleinerung des Zerkleinerungsgutes vorgesehen, wobei die auf die Zerkleinerungswalze einwirkenden Kräfte dazu führen, dass die Drehzahl der Zerkleinerungswalze gegenüber der Drehzahl der Regelbetriebssituation reduziert ist bzw. wird und/oder dass an dem wenigstens einen Antriebsmotor ein höheres Drehmoment anliegt.

Schließlich lässt sich der Überlastfall insbesondere dahingehend von der Lastsituation und der Regelbetriebssituation abgrenzen, dass im Überlastfall die Zerkleinerungswalze droht, sich festzusetzen bzw. sich Aufgabegut in der Zerkleinerungsvorrichtung verkeilt bzw. verklemmt hat. Hier droht im Überlastfall, dass die Zerkleinerungswalze feststeht bzw. sich nicht mehr drehen kann, da die Antriebsdrehmomentübertragung bzw. Drehmomentbeaufschlagung ausgehend von dem wenigstens einen Antriebsmotor zu der Zerkleinerungswalze weiterhin besteht. Erfindungsgemäß kann im Überlastfall die Übertragung des Drehmomentes von dem Antriebsrad zu dem Zentralrad dahingehend verbessert bzw. erhöht werden, da aufgrund der seitens der Zerkleinerungswalze durchgeführten Ausweichbewegung das Zentralrad, insbesondere das Dämpfungsmittel, stärker an das wenigstens eine Antriebsrad gepresst wird, was wiederum zur Verbesserung der Kraftübertragung beim Reibschluss zum Antrieb der Zerkleinerungswalze führt. Somit ist bereits durch die erfindungsgemäße Ausgestaltung - ohne äußeren zusätzlichen Eingriff - eine Regulierung im Lastfall bzw. auch im Überlastfall ermöglicht.

Die Überwachungseinrichtung kann jedoch feststellen, wenn die aufgrund des Reibantriebes ermöglichte Selbstregulierung nicht mehr ausreichend ist, den Überlastfall zu kompensieren.

Das erfindungsgemäße Antriebssystem ermöglicht somit insbesondere, dass hohe ungewollte Belastungen bzw. Überlastungen innerhalb des gesamten Antriebssystems vermieden werden können.

In der Überwachungseinrichtung kann ferner auch das zu verarbeitende Zerkleinerungsgut zur Detektion des Überlastfalls berücksichtigt werden. So kann in Anhängigkeit von dem zu verarbeitenden Zerkleinerungsgut bzw. Aufgabegut die Betriebssituation der Zerkleinerungsvorrichtung überwacht werden und im Überlastfall in Abhängigkeit von dem zu verarbeitenden Zerkleinerungsgut in der Überwachungseinrichtung abgebildet bzw. bestimmbar sein. Ein Abgleich zwischen der Regelbetriebssituation und der derzeit vorhandenen bzw. detektierten Betriebssituation der Zerkleinerungsvorrichtung kann von der Überwachungseinrichtung zum Detektieren bzw. Feststellen eines Überlastfalles genutzt werden.

Insbesondere versteht es sich, dass unter einer Detektion eines Überlastfalls auch zu verstehen ist, dass ein drohender Überlastfall erkannt wird. Eine solche Vorgabe wird erfindungsgemäß auch als Detektion des Überlastfalls verstanden.

Vorzugsweise ist der, insbesondere alle, Antriebsmotoren(en) über die Überwachungseinrichtung steuerbar. Die Überwachungseinrichtung kann den und/oder die Antriebsmotor(en) im Überlastfall oder bei drohendem Überlastfall - insbesondere im Lastfall - dahingehend ansteuern, dass, bevorzugt zur Erhöhung des Anpressdruckes des Antriebsrades an das Zentralrad, das Drehmoment des, bevorzugt aller, Antriebsmotors(en) erhöht wird. Alternativ oder zusätzlich kann vorgesehen sein, dass die Überwachungseinrichtung den und/oder die Antriebsmotor(en) im Überlastfall oder bei drohendem Überlastfall bzw. im Lastfall dahingehend ansteuert, dass die Drehrichtung des, bevorzugt aller, Antriebsmotor(en) umgekehrt wird, insbesondere so dass die Drehrichtung der Zerkleinerungswalze für eine Reversierbewegung umgekehrt wird. Die Reversierbewegung kann insbesondere bis zu einem maximalen Drehwinkel der erfolgten Reversierbewegung der Zerkleinerungswalze erfolgen.

Demzufolge dreht sich vorzugsweise die Zerkleinerungswalze mit einem vergleichsweise geringen bzw. begrenzten Drehwinkel gegenläufig zur Zerkleinerungs-Drehrichtung zurück. Erfindungsgemäß ist festgestellt worden, dass eine derartige Reversierbewegung bereits ausreicht, um eingeklemmtes Zerkleinerungsgut aus der Klemmung zu befreien bzw. dieses wieder zu lockern, so dass es sich aus der Klemmung lösen lässt. Nach Erreichen des vorgegebenen maximalen Drehwinkels wird die Reversierbewegung der Zerkleinerungswalze gestoppt. Statt eines vorgegebenen Drehwinkels, der zwischen 30° und mehreren Umdrehungen liegen kann, kann auch vorgesehen sein, dass sich die Zerkleinerungswalze über einen vorgegebenen Zeitraum in der Reversier-Drehrichtung dreht.

Vorzugsweise ist im Überlastfall bzw. im Lastfall der maximale Drehwinkel der bewirkten Reversierbewegung der Zerkleinerungswalze zwischen 1° bis 360°, bevorzugt zwischen 2° bis 180°, weiter bevorzugt zwischen 5° bis 90° und insbesondere zwischen 5° bis 20°.

Die Reversierbewegung ermöglicht insbesondere, dass die Zerkleinerungsvorrichtung die Blockade bzw. die Klemmung selbst lösen kann, da der Spalt zwischen den Zerkleinerungswerkzeugen und gegen Zerkleinerungswerkzeuge vergrößert werden kann. So kann das geklemmte Gut sich wieder lösen, so dass Maschinenschäden oder dergleichen aufgrund der Klemmung vermieden werden können. Damit kann sich die Zerkleinerungsvorrichtung selbst wieder aus einer, insbesondere drohenden, Klemmung befreien. Eine drohende Klemmung ist derart zu verstehen, dass die Überwachungseinrichtung durch die Detektion des drohenden Überlastfalls oder des Überlastfalls eine sich abzeichnende Blockade erkennen und den Regelbetrieb der Zerkleinerungsvorrichtung stoppen kann.

Um die Verstopfung bzw. Klemmung zu lösen, ist es somit erfindungsgemäß insbesondere nicht mehr erforderlich, den gesamten Antriebsstrang abzuschalten. Ferner kann - jedenfalls in den meisten Fällen - auch vermieden werden, dass eine Bedienperson manuell bzw. händisch das eingeklemmte Zerkleinerungsgut aus der Klemmung lösen muss. Dadurch kann die Arbeitssicherheit erhöht werden. Auch lässt sich eine solche Klemmung durch die bevorzugte Ausgestaltung der Erfindung vergleichsweise schnell lösen, so dass auch die Ausfallzeit der Zerkleinerungsvorrichtung durch vermiedene Abschaltungen der Zerkleinerungsvorrichtung drastisch reduziert werden kann.

Alternativ oder zusätzlich kann gemäß einer weiteren bevorzugten Ausführungsform vorgesehen sein, dass das Drehmoment wenigstens eines Antriebsmotors, bevorzugt aller Antriebsmotoren, durch die Überwachungseinrichtung zur Schlupfkontrolle zwischen Antriebsrad und Zentralrad vorgegeben werden kann. Insbesondere kann somit das Drehmoment wenigstens eines Antriebsmotors in Abhängigkeit des Schlupfes zwischen Antriebsrad und Zentralrad von der Überwachungseinrichtung gesteuert und/oder geregelt werden. Besonders vorteilhaft ist diese Art der Regelung bei der Drehzahl-synchronisierten Betriebsweise der Antriebsmotoren und/oder bei der Drehmoment-optimierten Arbeitsweise. Zudem kann ein mögliches "Durchdrehen" des, bevorzugt elektrischen, Antriebsmotors insbesondere bei der Drehmoment-optimierten Arbeitsweise verhindert werden. So kann insbesondere weiter verhindert werden, dass ein zu hoher Reibverschleiß auftritt und/oder eine Brandgefahr hervorgerufen wird.

Vorzugsweise ist die Überwachungseinrichtung im Überlastfall oder bei drohendem Überlastfall bzw. im Lastfall zur Verstellung des Antriebsrades in radialer Richtung der Zentralachse ausgebildet. In diesem Zusammenhang versteht es sich, dass es bei der Verstellung des Antriebsrades ausreicht, wenn zumindest ein Anteil der Verstellbewegung in radialer Richtung der Zentralachse verläuft. Vorzugsweise dient die Verstellung des Antriebsrades zur Erhöhung des Antriebsdruckes des Antriebsrades an das Zentralrad. Insbesondere ergibt sich bereits eine Erhöhung des Anpressdruckes dadurch, dass das Zentralrad gegen das Antriebsrad im Lastfall und im Überlastfall gedrückt wird - aufgrund der Ausweichbewegung der Zerkleinerungswalze. Dieser Anpressdruck kann nun durch eine durch die Überwachungseinrichtung vorgegebene - aktive - Verstellung des wenigstens einen Antriebsrades erhöht werden. In diesem Zusammenhang versteht es sich, dass bevorzugt alle Antriebsräder, insbesondere synchron, verstellt werden. Die Verstellung des Antriebsrades kann über eine Verstellung der Welle in radialer Richtung - das heißt zumindest mit einem Anteil in radialer Richtung - der Zentralachse und/oder über das Verspannmittel und/oder die Exzenter-Lagerungseinheit und/oder den Schiebesitz erreichbar sein.

Alternativ oder zusätzlich kann vorgesehen sein, dass die Überwachungseinrichtung derart ausgebildet ist, dass im Überlastfall oder bei drohendem Überlastfall für einen festgelegten Zeitraum zunächst der Anpressdruck des Antriebsrades auf das Zentralrad über eine Erhöhung des Drehmomentes des Antriebsmotors und/oder über eine Verstellung des Antriebsrades in radialer Richtung der Zentralachse erhöht wird. Insbesondere wird nach Überschreiten eines festgelegten Zeitraums und der Detektion eines weiterhin bestehenden Überlastfalls oder drohenden Überlastfalles durch die Überwachungseinrichtung die Reversierbewegung der Zerkleinerungswalze über eine Drehrichtungsumkehr des Antriebsmotors, bevorzugt aller Antriebsmotoren, eingeleitet.

Somit kann in einem ersten Schritt zunächst der Anpressdruck des Antriebsrades auf das Zentralrad erhöht werden und in einem zweiten - nur bei einem weiterhin drohendem Überlastfall durchzuführenden - Prozessschritt kann anschließend die Reversierbewegung der Zerkleinerungsvorrichtung bewirkt werden. So wird zunächst erfindungsgemäß versucht, ohne eine Reversierbewegung den Überlastfall zu beseitigen. Sollte dies nicht erfolgreich sein - das heißt der Überlastfall oder der drohende Überlastfall weiterhin bestehen - kann die Reversierbewegung eingeleitet werden. Der vorgegebene Zeitraum kann in Abhängigkeit des Verfahrensablaufes vorgegeben werden und insbesondere zwischen 0,01 Minuten bis 60 Minuten, bevorzugt zwischen 0,1 Minuten bis 10 Minuten, betragen.

Vorzugsweise ist die Überwachungseinrichtung derart ausgebildet, dass nach maximal 10, bevorzugt maximal 8, weiter bevorzugt zwischen 2 bis 5, erfolgten Reversierbewegungen der Zerkleinerungswalze innerhalb von 5 Minuten, bevorzugt zwischen 0,2 Minuten bis 3 Minuten, die Zerkleinerungsvorrichtung abgeschaltet wird. Anschließend kann insbesondere über eine mit der Überwachungseinrichtung verbundene Signaleinrichtung ein optisches und/oder akustisches Warnsignal ausgegeben werden. Es ist festgestellt worden, dass insbesondere nach einer solchen Anzahl der Reversierbewegungen in dem vorgegebenen Zeitintervall keine selbsttätige Lösung der Klemmung zu erwarten ist. Demzufolge ist ein händisches bzw. manuelles Eingreifen zur Säuberung der Zerkleinerungsvorrichtung und zur Lösung des eingeklemmtes Zerkleinerungsgutes erforderlich. Dabei erkennt die Überwachungseinrichtung von selbst, dass die Zerkleinerungsvorrichtung nicht mehr selbst die Klemmung bzw. die Blockade lösen kann. Damit auch außenstehendes Bedienpersonal alarmiert werden kann, ist eine Signalausgabe über die Signaleinrichtung vorgesehen.

Darüber hinaus kann die Überwachungseinrichtung zur Synchronsteuerung aller Antriebsmotoren ausgebildet sein. Die Antriebsmotoren werden bevorzugt sowohl im Regelbetrieb der Zerkleinerungsvorrichtung als auch im Lastfall und insbesondere im Überlastfall synchron gesteuert.

Bevorzugt wird als Antriebsmotor ein elektrischer Antriebsmotor bzw. elektrischer Einzelantrieb eingesetzt. Insbesondere kann das Betriebsverhalten des elektrischen Antriebsmotors für seine Steuerung bzw. Regelung besonders vorteilhaft ausgenutzt werden. So zeichnet sich ein elektrischer Antriebsmotor insbesondere durch eine hohe Überlastfähigkeit und/oder gute Regelbarkeit aus.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische perspektivische Darstellung einer erfindungsgemäßen Zerkleinerungsvorrichtung,
- Fig. 2: eine schematische Seitenansicht der in Fig. 1 gezeigten Zerkleinerungsvorrichtung,
- Fig. 3: eine schematische perspektivische Darstellung der in Fig. 1 gezeigten Zerkleinerungsvorrichtung mit geöffnetem Gestell,
- Fig. 4: eine schematische Schnittdarstellung der in Fig. 1 gezeigten Zerkleinerungsvorrichtung,
- Fig. 5: eine weitere schematische Schnittdarstellung der in Fig. 1 gezeigten Zerkleinerungsvorrichtung,
- Fig. 6: eine schematische perspektivische Darstellung einer erfindungsgemäßen Seitenplatte,
- Fig. 7: eine schematische perspektivische Explosionsansicht eines erfindungsgemäßen Zentralrades,
- Fig. 8: eine schematische Darstellung von Teilen einer weiteren Ausführungsform einer erfindungsgemäßen Zerkleinerungsvorrichtung und
- Fig. 9: eine schematische Darstellung von Teilen einer weiteren Ausführungsform einer erfindungsgemäßen Zerkleinerungsvorrichtung.

Dargestellt ist eine Zerkleinerungsvorrichtung 1 zur Zerkleinerung von nicht dargestelltem Zerkleinerungsgut. Bei der Zerkleinerungsvorrichtung 1 kann es sich sowohl um eine mobile als auch um eine stationäre Vorrichtung handeln. Die Zerkleinerungsvorrichtung 1 kann zur Verwendung im Bereich des Recyclings oder aber auch der Abfallverarbeitung eingesetzt werden. Auch andere Verwendungen bzw. Einsatzzwecke der Zerkleinerungsvorrichtung 1 sind ohne Weiteres möglich. Bei dem Zerkleinerungsgut kann es sich beispielsweise um Abfall unterschiedlichster Zusammensetzungen und/oder Fraktionen handeln. Die Zerkleinerungsvorrichtung 1 weist im dargestellten Ausführungsbeispiel eine Zerkleinerungswalze 2 auf, die um eine bei den dargestellten Ausführungsbeispielen horizontale Zentralachse 3 drehbar ist bzw. um die Zentralachse 3 rotiert.

Hinzuweisen ist darauf, dass die Zerkleinerungsvorrichtung 1 nicht auf die Verwendung nur einer Zerkleinerungswalze 2 beschränkt ist. Grundsätzlich kann die Zerkleinerungsvorrichtung 1 auch wenigstens zwei Zerkleinerungswalzen 2 aufweisen, die nebeneinander mit parallel verlaufenden Zentralachsen 3 angeordnet sind und zwischen denen ein Walzenspalt vorgesehen ist. Die nachstehenden Ausführungen, die sich auf die Verwendung nur einer Zerkleinerungswalze 2 beziehen, sind auf eine Zerkleinerungsvorrichtung 1 mit wenigstens zwei Zerkleinerungswalzen 2 entsprechend anzuwenden.

Bei der dargestellten Ausführungsform weist die Zerkleinerungsvorrichtung 1 zwei Antriebseinrichtungen 4 zum Antrieb der Zerkleinerungswalze 2 auf. Hinzuweisen ist darauf, dass grundsätzlich auch nur eine einzige Antriebseinrichtung 4 zum Antrieb der Zerkleinerungswalze 2 vorgesehen sein kann. Die nachfolgenden Ausführungen, die sich nur auf eine Antriebseinrichtung 4 beziehen, gelten insbesondere für beide Antriebseinrichtungen 4.

Die Antriebseinrichtungen 4 sind end- bzw. stirnseitig der Zerkleinerungswalze 2 vorgesehen bzw. angeordnet.

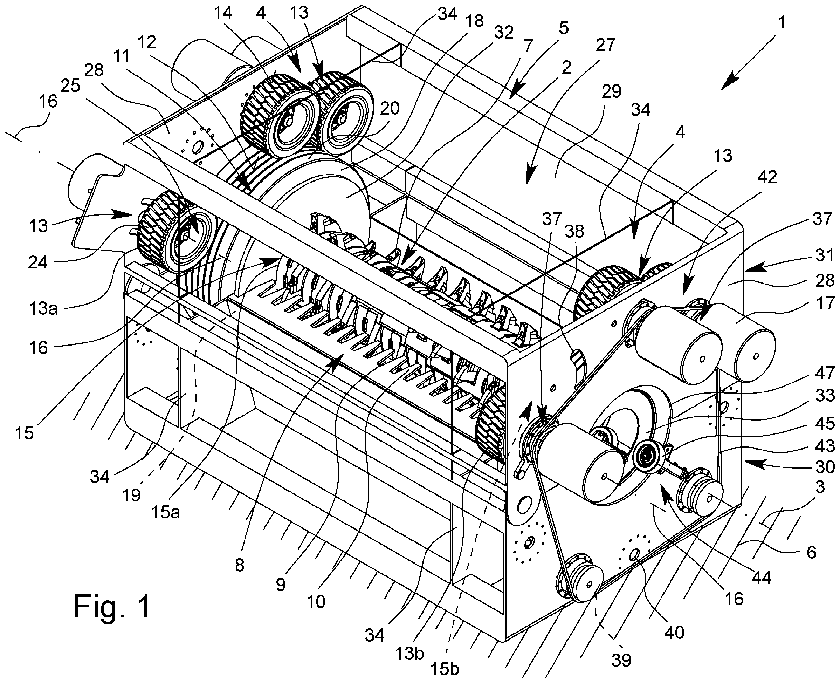

In Fig. 1 ist weiterhin ein Gestell 5 gezeigt, das zur Halterung und/oder Lagerung der Zerkleinerungswalze 2 und/oder der Antriebseinrichtung(en) 4 dient. Nicht dargestellt ist, dass das Gestell 5 mit einer Grundplatte verbunden werden kann, die grundsätzlich auch rahmenförmig ausgeführt sein kann. Letztlich kann das Gestell 5 an einem Untergrund 6 angeordnet werden. Der Untergrund 6 dient letztlich zur Auflage des Gestells 5 bzw. der gesamten Zerkleinerungsvorrichtung 1. Der Untergrund 6 kann durch den Boden oder auch durch eine Grundplatte gebildet werden.

Darüber hinaus ist in den dargestellten Ausführungsbeispiele die Zuführung des Zerkleinerungsgutes zu der Zerkleinerungsvorrichtung 1 nicht näher dargestellt. Grundsätzlich kann vorgesehen sein, dass der Zerkleinerungsvorrichtung 1 ein Trichter zugeordnet ist, in den beispielsweise eine Schütte mündet. Über die Schütte kann Zerkleinerungsgut zugeführt werden, das beispielsweise in den Trichter fallen und der Zerkleinerungswalze 2 zugeführt werden kann. Der Trichter kann sich auf der Schütte gegenüberliegenden Seite noch eine neigungsverstellbare Platte aufweisen. Die Neigung der Platte wird je nach Aufgabegut eingestellt. Darüber hinaus ist nicht dargestellt, dass die Zerkleinerungsvorrichtung 1 einen Förderer aufweisen kann, bei dem es sich beispielsweise um einen Bandförderer handeln kann. Die Neigungsrichtung des Förderers kann verstellbar sein.

Im Übrigen weist die Zerkleinerungswalze 2 über ihren äußeren Umfang verteilt eine Mehrzahl von Zerkleinerungswerkzeugen 7 auf, während im Gestell 5 ein Gegenkamm 8 vorgesehen sein kann. Die Zerkleinerungswerkzeuge 7 kämmen mit dem Gegenkamm 8, der für die Zerkleinerungswerkzeuge 7 entsprechende Schlitze 9 vorsieht. Zwischen den Schlitzen 9 befinden sich die Gegenkammzähne 10. Befindet sich ein Zerkleinerungswerkzeug 7 in einem Schlitz 9 des Gegenkamms 8, ist zwischen dem jeweiligen Zerkleinerungswerkzeug 7 und den benachbarten Gegenkammzähnen 10 jeweils noch ein Abstand vorgesehen, der beispielsweise zwischen 2 mm bis 10 mm betragen kann.

Bei dem in Fig. 1 dargestellten Ausführungsbeispiel ist vorgesehen, dass die Antriebseinrichtung 4 bzw. beide Antriebseinrichtungen 4 ein drehsteif mit der Zerkleinerungswalze 2 verbundenes Zentralrad 11 und wenigstens ein an der Außenoberfläche 12 des Zentralrades 11 kraft- bzw. reibschlüssig angreifendes und zum Antrieb des Zentralrades 11 ausgebildetes Antriebsrad 13 aufweist/aufweisen. Das Antriebsrad 13 ist mit seiner Außenoberfläche 14 an der Außenoberfläche 12 des Zentralrades 11 angeordnet. Das wenigstens eine Antriebsrad 13 bildet gemeinsam mit dem Zentralrad 11 einen Reibradantrieb zum Antrieb der Zerkleinerungswalze 2.

Vorzugsweise werden beide Antriebseinrichtungen 4 synchron betrieben bzw. gesteuert.

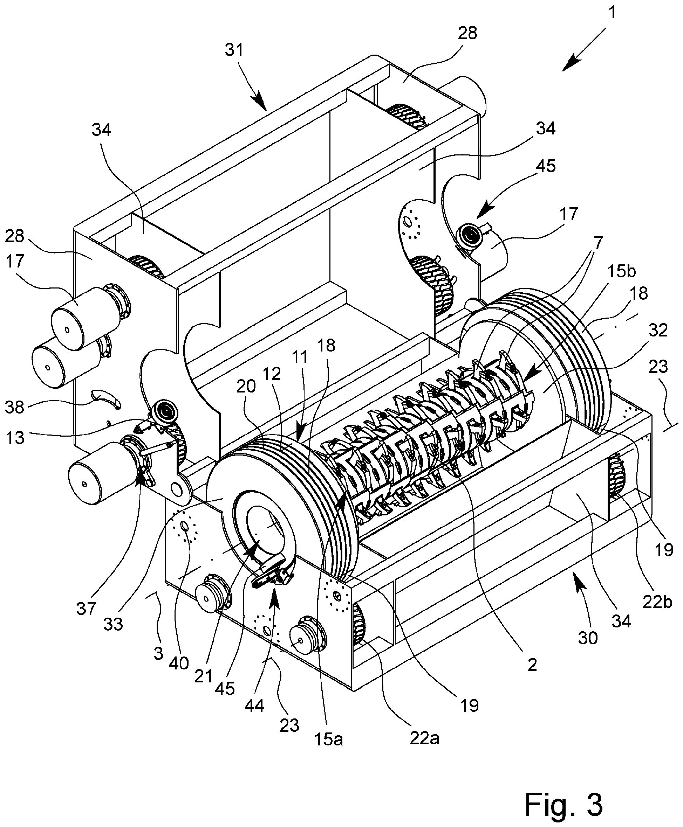

Darüber hinaus zeigt Fig. 3, dass an beiden stirnseitigen Enden 15a, 15b der Zerkleinerungswalze 2 jeweils ein Zentralrad 11 mit dem wenigstens einen zusammenwirkenden Antriebsrad 13 angeordnet bzw. gelagert ist. Letztlich greift das Antriebsrad 13 an dem Zentralrad 11 an.

Fig. 1 zeigt, dass bei der Anordnung der Antriebsräder 13 vorgesehen ist, dass die Antriebsräder 13 an beiden stirnseitigen Enden 15a, 15b der Zerkleinerungswalze 2 derart zueinander paarweise angeordnet sind, dass die Drehachse 16 eines ersten Antriebsrades 13a an dem ersten stirnseitigen Ende 15a der Zerkleinerungswalze 2 zumindest im Wesentlichen mit der Drehachse 16 eines weiteren Antriebsrades 13b an dem anderen weiteren stirnseitigen Ende 15b der Zerkleinerungswalze 2 übereinstimmt. Somit kann eine symmetrische Anordnung der Antriebsräder 13 der Antriebseinrichtungen 4 vorgesehen sein. Jedenfalls sind die Antriebsräder 13 auf gegenüberliegenden Seiten zumindest im Wesentlichen spiegelsymmetrisch gelagert.

Fig. 1 zeigt schematisch, dass die Zentralachse 3 zumindest im Wesentlichen parallel zur Drehachse 16 des Antriebsrades 13 verläuft. Auch die Drehachsen 16 bei einer Mehrzahl von Antriebsrädern 13 können zumindest im Wesentlichen parallel zueinander angeordnet sein. Dabei bezieht sich die parallele Anordnung jedenfalls auf den Nicht-Betriebszustand der Antriebsräder.

Letztlich kann sowohl das Zentralrad 11 als auch das Antriebsrad 13 als Reibrad ausgebildet sein.

Fig. 1 zeigt weiter, dass dem Antriebsrad 13 ein Antriebsmotor 17 zum Antrieb des Antriebsrades 13 zugeordnet ist. Der Antriebsmotor 17 kann ein hydraulischer oder elektrischer Motor sein. Der Antriebsmotor 17 kann drehsteif an dem Gestell 5 angeordnet und befestigt sein.

Ferner kann eine Mehrzahl von Antriebsrädern 13 eingesetzt werden. Jedenfalls sind die Antriebsräder 13 auf gegenüberliegenden Seiten zumindest im Wesentlichen spiegelsymmetrisch angeordnet und gelagert. In dem in Fig. 1 dargestellten Ausführungsbeispiel ist jedem Antriebsrad 13 ein eigener Antriebsmotor 17 zugeordnet.

Bevorzugt werden die Antriebsmotoren 17 synchron betrieben. Vorzugsweise ist auch ein synchroner Antrieb der Antriebsmotoren 17 von beiden Antriebseinrichtungen 4 an beiden stirnseitigen Enden 15 der Zerkleinerungswalze 2 vorgesehen.

Die Antriebsräder 13 können letztlich planetenartig um das Zentralrad 11 herum angeordnet sein.

Dabei ist der Drehsinn der Antriebsräder 13 gegenläufig zum Drehsinn der Zerkleinerungswalze 2 und des Zentralrades 11.

Bei dem in Fig. 1 dargestellten Ausführungsbeispiel sind die Antriebsräder 13 im Bereich der oberen Hälfte 18 des Zentralrades 11 angeordnet. Die obere Hälfte 18 des Zentralrades 11 ist dem Untergrund 6 abgewandt. Letztlich kann das Zentralrad 11 in eine obere Hälfte 18 und eine untere Hälfte 19 aufgeteilt werden. Die untere Hälfte 19 ist dabei dem Untergrund 6 zugewandt.

In Fig. 3 ist gezeigt, dass das Zentralrad 11 ein flexibles Dämpfungsmittel 20 aufweist. In dem dargestellten Ausführungsbeispiel ist das Dämpfungsmittel 20 kreisringförmig und insbesondere als Radreifen ausgebildet. Durch das Dämpfungsmittel 20 kann eine Bewegung der Zerkleinerungswalze 2 in radialer Richtung der Zentralachse 3 ermöglicht werden. Letztlich kann die Zerkleinerungswalze 2 über das Dämpfungsmittel 20 des Zentralrades 11 gedämpft werden. Dabei kann das Antriebsrad 13 an der Außenoberfläche 12 des Dämpfungsmittels 20 angeordnet sein. Letztlich handelt es sich bei der Außenoberfläche 12 um die Lauffläche des Dämpfungsmittels 20.

Über die Antriebseinrichtungen 4 kann die Zerkleinerungswalze 2 letztlich beidseitig gedämpft gelagert sein, insbesondere über die Dämpfungsmittel 20 der Zentralräder 11. Der Vorteil an der Dämpfung ist, dass die Zerkleinerungswalze 2 in radialer Richtung, also quer zur Zentralachse 3, in beschränktem Maße beweglich ist.

Das Dämpfungsmittel 20 kann vorliegend zumindest im Wesentlichen insbesondere an seiner peripheren Außenseite 12 ein Kautschukmaterial aufweisen und insbesondere eine Profilierung ausbilden bzw. aufweisen.

Bevorzugt kann das Dämpfungsmittel 20 ein elastisches Material aufweisen oder daraus bestehen. Als Material kann Kautschuk als Basismaterial, gegebenenfalls mit einem Verstärkungsmaterial, vorgesehen sein.

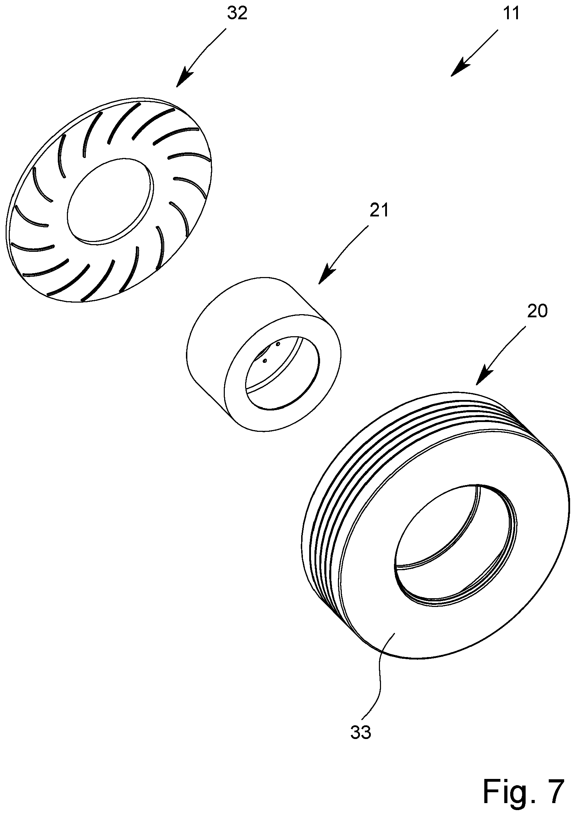

Bei dem Dämpfungsmittel 20 kann es sich insbesondere um einen befüllbaren Hohlkörper oder um einen Vollkörper handeln. Zur Befüllung des Hohlkörpers kann Druckluft vorgesehen sein. Es kann aber auch ein anderes Druckmedium eingesetzt werden. Innenseitig kann das Dämpfungsmittel 20 geöffnet ausgebildet sein, so dass sich im Querschnitt insbesondere eine U-Form ergibt, wie in Fig. 7 schematisch gezeigt.

Grundsätzlich kann auch vorgesehen sein, dass die Steifigkeit des Dämpfungsmittels 20, insbesondere während des Betriebes der Zerkleinerungsvorrichtung 1, veränderbar ist, vorzugsweise durch den Grad der Befüllung mit Druckluft. So kann der Anpressdruck zwischen Zentralrad 11 und Antriebsrad 13 verändert werden.

Insbesondere kann die Ausweichbewegung der Zerkleinerungswalze 2 maximal auf den geringsten Abstand zwischen den Gegenkammzähnen 10 und den Zerkleinerungswerkzeugen 7 begrenzt werden. Vorzugsweise wird eine Ausweichbewegung der Zerkleinerungswalze 2 in radialer Richtung in Bezug zur Zentralachse 3 zwischen 1 cm bis 2 cm ermöglicht.

Fig. 7 zeigt, dass das Zentralrad 11 ein Scheibenrad 21 aufweist. Das Scheibenrad 21 kann sich letztlich insbesondere aus der Radfelge und der Radschüssel zusammensetzen. Das Scheibenrad 21 kann fest mit der Zerkleinerungswalze 2, insbesondere drehsteif, verbunden sein. Das Dämpfungsmittel 20 kann außenseitig an dem Scheibenrad 21 angeordnet sein. Letztlich kann das Scheibenrad 21, vorzugweise die Felge des Scheibenrades 21, zur Aufnahme des Dämpfungsmittels 20 dienen, wobei insbesondere bei der Ausbildung des Dämpfungsmittels 20 als Hohlkörper die offene Seite des im Querschnitt U-förmig ausgebildeten Dämpfungsmittels 20 an das Scheibenrad 21 angeordnet werden kann.

Neben dem Antriebsrad 13 sind Stützräder 22 bzw. wenigstens ein Stützrad 22 vorgesehen, wobei das Stützrad 22 an der Außenoberfläche 12 des Zentralrades 11, insbesondere des Dämpfungsmittels 20, kraftschlüssig angreifend angeordnet ist. Auch das Stützrad 22 kann als Reibrad ausgebildet sein. Bei einer Mehrzahl von Stützrädern 22 sind diese ebenfalls planetenartig um das Zentralrad 11 herum angeordnet. Zudem kann das Stützrad 22 durch das Zentralrad 11 drehbar sein. Insbesondere ist das Stützrad 22 als drehbares Widerlager ausgebildet. Es dient letztlich zur Aufnahme der Reaktionskräfte bzw. des Drehmomentes.

Sofern zwei Antriebseinrichtungen 4 an beiden stirnseitigen Enden 15 der Zerkleinerungswalze 2 angeordnet sind, so ist bevorzugt eine symmetrische Anordnung der Stützräder 22 der Antriebseinrichtungen 4 vorgesehen, insbesondere derart, dass die Stützräder 22 an beiden stirnseitigen Enden 15 der Zerkleinerungswalze 2 zueinander paarweise angeordnet sind, wobei die Mittelachse 23 eines ersten Stützrades 22a an dem ersten stirnseitigen Ende 15a der Zerkleinerungswalze 2 zumindest im Wesentlichen mit der Mittelachse 23 eines weiteren Stützrades 22b an dem anderen stirnseitigen Ende 15b der Zerkleinerungswalze 2 übereinstimmt, wie aus Fig. 3 ersichtlich wird. Die vorgenannte Beschreibung bezieht sich - wie bereits zuvor ausgeführt - auf den Nicht-Betriebszustand.

Bevorzugt ist je Antriebseinrichtung 4 eine Mehrzahl von Stützrädern 22, insbesondere eine geradzahlige Mehrzahl, vorgesehen. Darüber hinaus stimmt bei beiden Antriebseinrichtungen 4 vorzugsweise die Anzahl der Stützräder 22 überein, insbesondere wobei die Antriebseinrichtungen 4 zueinander symmetrisch (wie zuvor erläutert) ausgebildet sind.

In Fig. 1 ist dargestellt, dass die Stützräder 22 an der unteren Hälfte 19 des Zentralrades 11 angeordnet sind. So können die Antriebsräder 13 insbesondere ausschließlich an der oberen Hälfte 18 und die Stützräder 22 ausschließlich an der unteren Hälfte 19 des Zentralrades 11 angeordnet sein.

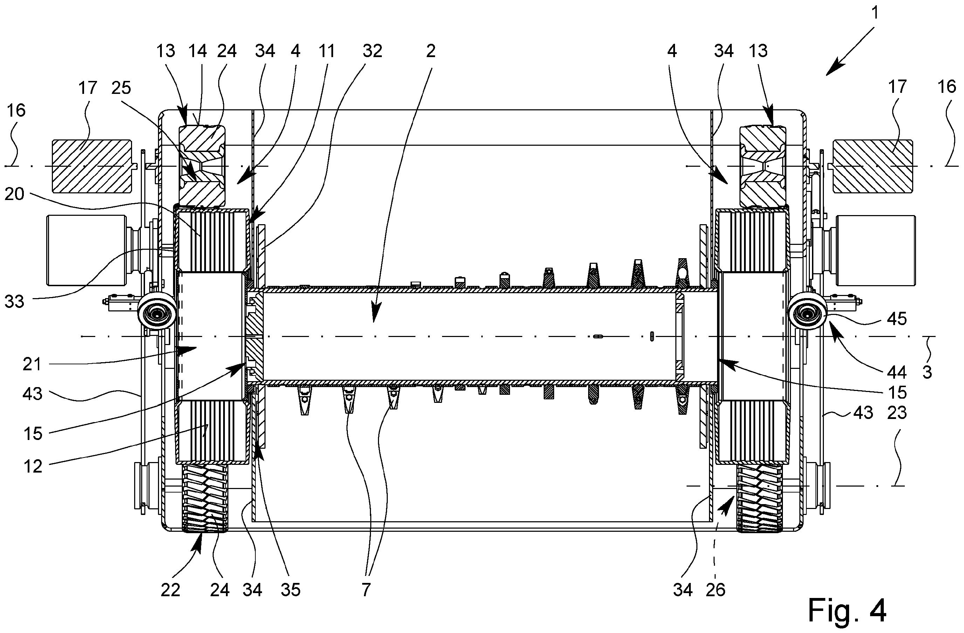

In Fig. 4 ist dargestellt, dass sowohl das Antriebsrad 13 als auch das Stützrad 22 ein weiteres Dämpfungsmittel 24 aufweisen. Insbesondere ist das weitere Dämpfungsmittel 24 kreisringförmig und/oder als Reifen, insbesondere als Radreifen, ausgebildet. Auch das weitere Dämpfungsmittel 24 kann als Vollkörper oder als mit einem Medium, insbesondere Druckluft, befüllbarer Hohlkörper ausgebildet sein. Bei dem in Fig. 4 gezeigten Ausführungsbeispiel ist das weitere Dämpfungsmittel 24 als Hohlkörper mit einem zumindest im Wesentlichen U-förmigen Querschnitt ausgebildet, das an das Scheibenrad 25 des Antriebsrades 13 und an das Scheibenrad 26 des Stützrades 22 angeordnet sein kann, insbesondere wobei die offene Seite des weiteren Dämpfungsmittels 24 dem jeweiligen Scheibenrad 25, 26 zugewandt ist.

Das weitere Dämpfungsmittel 24 kann eine Bewegung des Zentralrades 11 bzw. der Zerkleinerungswalze 2 in radialer Richtung der Zentralachse 3 ermöglichen. In dem dargestellten Ausführungsbeispiel weist sowohl das Zentralrad 11 ein Dämpfungsmittel 20 als auch das Antriebsrad 13 und das Stützrad 22 jeweils ein weiteres Dämpfungsmittel 24 auf.

In weiteren, nicht dargestellten Ausführungsformen kann vorgesehen sein, dass entweder das Zentralrad 11 ein Dämpfungsmittel 20 oder das Antriebsrad 13 und/oder das Stützrad 22 ein weiteres Dämpfungsmittel 24 aufweist. Letztlich kann die Dämpfung der Zerkleinerungswalze 2 entweder über das Zentralrad 11 oder über das Antriebsrad 13 und/oder das Stützrad 22 erreicht werden.

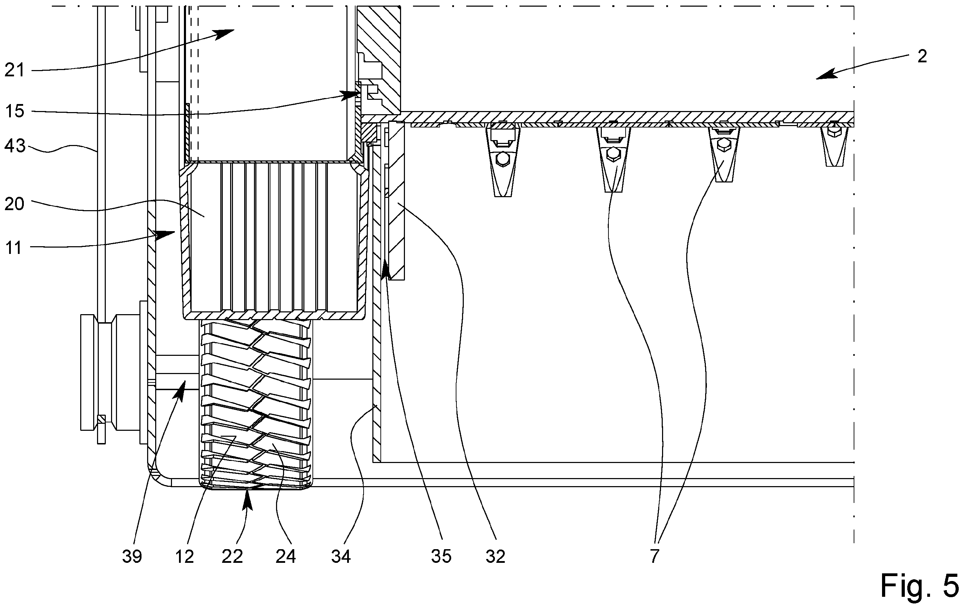

Die Fig. 5 zeigt schematisch, dass das Zentralrad 11, insbesondere das Dämpfungsmittel 20, auf seiner Außenoberfläche 12 eine Profilierung aufweist. Das weitere Dämpfungsmittel 24 kann ebenfalls auf seiner Außenoberfläche eine Profilierung aufweisen. Dabei kann sich die Profilierung des Dämpfungsmittels 20 von der Profilierung des weiteren Dämpfungsmittels 24 unterscheiden, insbesondere so dass ein möglicherweise entstehender Formschluss zwischen Zentralrad 11 und Antriebsrad 13 bzw. Stützrad 22 ausgeschlossen werden kann. Die Profilierungen dienen insbesondere zur Verbesserung des Reibschlusses zwischen Zentralrad 11 und Antriebsrad 13.

Wie zuvor erläutert, ist bei der dargestellten Ausführungsform ein Gestell 5 zur Halterung und/oder der Lagerung der Zerkleinerungswalze 2 und der Antriebseinrichtung(en) 4 vorgesehen. Das Zentralrad 11, das Antriebsrad 13 und das Stützrad 22 sind drehbar - zumindest mittelbar - an dem Gestell 5 gelagert. Das Gestell 5 bildet einen Aufnahmeraum 27 zur Anordnung der Zerkleinerungswalze 2 aus. Das Gestell 5 umfasst ferner äußere Stirnwandungen 28 sowie äußere Seitenwandungen 29. Die äußeren Seitenwandungen 29 können zur Begrenzung des Aufnahmeraums 27 vorgesehen sein. Die beiden äußeren Stirnwandungen 28 sind bevorzugt baugleich ausgeführt, und zwar im Hinblick auf die bevorzugte spiegelsymmetrische Anordnung der auf gegenüberliegenden vorgesehenen Antriebs- und Stützräder 13, 22.

Bei dem in Fig. 3 dargestellten Ausführungsbeispiel ist vorgesehen, dass sowohl die äußeren Stirnwandungen 28 als auch die äußeren Seitenwandungen 29 in zwei Teile unterteilt sind. Letztlich kann das Gestell 5 ein dem Untergrund 6 zugewandtes Unterteil 30 und ein Oberteil 31 aufweisen, wobei das Oberteil 31 gegenüber dem Unterteil 30 aufschwenkbar ist. Durch ein Aufschwenken des Oberteils 31 kann ein Eingriff in den Aufnahmeraum 27 ermöglicht werden, insbesondere wenn sich Zerkleinerungsgut in den Spalt zwischen den Gegenkammzähnen 10 und den Zerkleinerungswerkzeugen 7 verklemmt hat. Auch kann die Zerkleinerungswalze 2 durch ein Schwenken des Oberteils 31 beispielsweise mittels eines Krans entnommen werden. Insbesondere ist das Oberteil 31 an dem Unterteil 30 über eine nicht näher dargestellte Verriegelungseinrichtung verriegelbar. Durch Lösen der Verriegelungseinrichtung kann ein Aufschwenken des Oberteils 31 erfolgen. Letztlich kann das Gestell 5 als geschlossener Kasten angesehen werden.

Bei dem in Fig. 1 und Fig. 3 dargestellten Ausführungsbeispiel ist eine äußere Seitenwandung 29 entfernt worden, so dass ein Einblick in den Aufnahmeraum 27 ermöglicht wird.

In Fig. 3 ist dargestellt, dass an dem Zentralrad 11 - zumindest mittelbar - eine Seitenplatte 32 angeordnet ist. Die Seitenplatte 32 kann im eingesetzten Zustand des Zentralrades 11 der Zerkleinerungswalze 2 zugewandt sein, wie dies schematisch in Fig. 1 dargestellt ist.

Die Seitenplatte 32 ragt in weiteren, nicht dargestellten Ausführungsformen im Einbauzustand über den Außendurchmesser des Zentralrades 11 über, insbesondere wobei der Überstand zum Außendurchmesser des Zentralrades 11 nicht mehr als 20 cm beträgt.

Fig. 7 zeigt, dass das Zentralrad 11 eine weitere Seitenplatte 33 aufweist, die im Einbauzustand der äußeren Stirnwandung 28 zugewandt und somit der Zerkleinerungswalze 2 abgewandt ist, wie dies schematisch Fig. 3 zeigt. Das Dämpfungsmittel 20 wird somit von den Seitenplatten 32, 33 umgeben, die das Dämpfungsmittel 20 letztlich schützen. Auch grenzt die Seitenplatte 32 das Zentralrad 11 von dem Prozessraum ab. Die Seitenplatte 32 kann ebenso wie die weitere Seitenplatte 33 drehsteif mit dem Zentralrad 11 und/oder der Zerkleinerungswalze 2 verbunden sein. Insbesondere können sich die Seitenplatten 32, 33 gegenüber dem Gestell 5 rotieren.

Fig. 3 zeigt, dass das Gestell 5 weitere Wandungen 34 aufweist, wobei die Zerkleinerungswalze 2 zwischen den weiteren Wandungen 34 eingefasst ist. In Fig. 1 ist der obere Teil der weiteren Wandungen 34 weggelassen worden. Die weiteren Wandungen 34 sind in dem Aufnahmeraum 27 angeordnet. Die Seitenplatte 32 kann an einer weiteren Wandung 34 des Gestells 5 angrenzend angeordnet sein, insbesondere wobei die weitere Wandung 34 gehäusefest bzw. ortsfest am Gestell 5 angeordnet ist, wohingegen die Seitenplatte 32 drehbar mit der Zerkleinerungswalze 2 verbunden ist.

Darüber hinaus kann die Seitenplatte 32 von dem Zentralrad 11 bzw. von dem Dämpfungsmittel 20 über die weitere Wandung 34 beabstandet sein. Somit liegt die Seitenplatte 32 nicht unmittelbar an dem Dämpfungsmittel 20 an.

In Fig. 3 ist gezeigt, dass zwischen der weiteren Wandung 34 und der äußeren Stirnwandung 28 die Antriebseinrichtung 4 und insbesondere sowohl das Zentralrad 11 als auch die Antriebsräder 13 und die Stützräder 22 angeordnet sind.

Zwischen der Seitenplatte 32 und der weiteren Wandung 34 wird eine Labyrinthdichtung 35 ausgebildet.

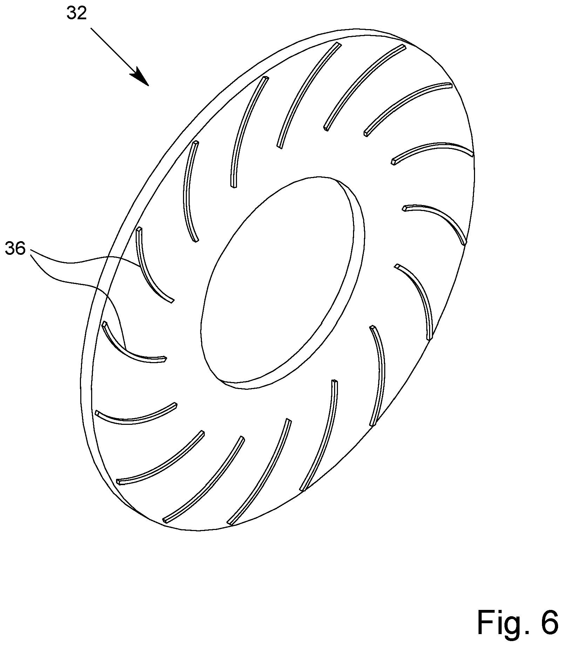

Die Labyrinthdichtung 35 geht schematisch aus der Fig. 5 und der Fig. 6 hervor, die die Seitenplatte 32 zeigt. Letztlich kann die Labyrinthdichtung 35 durch nach außen gerichtete - das heißt vom Mittelpunkt weg weisende - Spiralkufen bzw. Spiralrippen 36 gebildet werden. Diese bogenabschnittsförmigen Spiralrippen 36, die insbesondere entgegen dem Drehsinn der Zerkleinerungswalze 2 verlaufen bzw. gebogen sind, dienen dazu, Schmutz von dem Zentralrad 11 weg und in den Prozessraum hinein- bzw. zurückzufördern. Die Labyrinthdichtung 35 und die Spiralrippen 36 ermöglichen eine berührungsfreie Wellendichtung.

Zum Antrieb des Antriebsrades 13 kann eine mit dem Antriebsmotor 17 verbundene Antriebswelle 37 vorgesehen sein. Die Antriebswelle 37 kann durch einen Durchbruch 38 der äußeren Stirnwandung 28 des Gestells 5 geführt sein. Fig. 1 zeigt, dass der Antriebsmotor 17 außenseitig über die äußere Stirnwandung 28 übersteht.

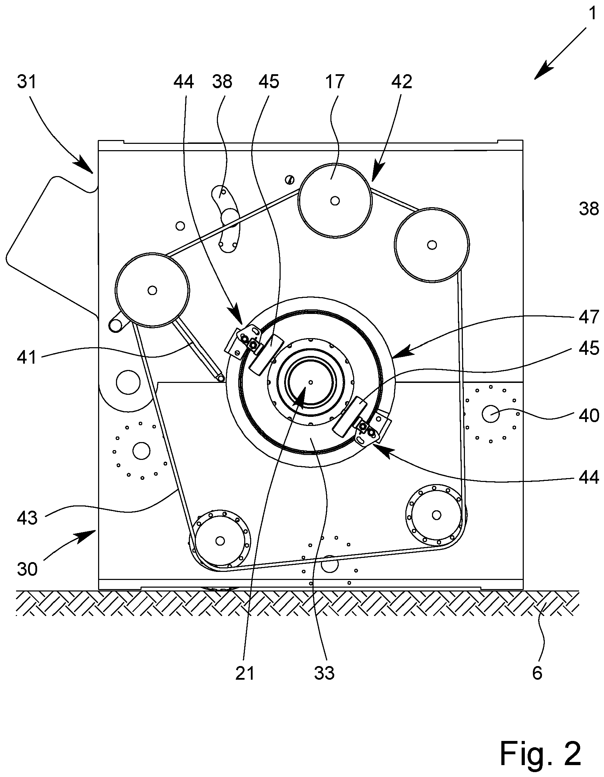

Zur Verstellung der Position des Antriebsrades 13 in radialer Richtung der Zentralachse 3 kann der Durchbruch 38 als Langloch ausgebildet sein, wie in Fig. 1 schematisch dargestellt ist. Letztlich kann eine Verstellung der Position des Antriebsrades 13 auch über bereits einen Anteil in radialer Richtung der Zentralachse 3 erreicht werden. Eine Ausbildung des Durchbruches 38 als Langloch ist schematisch auch in der Fig. 2 dargestellt.

Zudem kann das Stützrad 22 eine Stützachse 39 aufweisen, die durch einen weiteren Durchbruch 40 geführt ist. Die Stützachse 39 kann gehäusefest bzw. ortsfest mit dem Gestell 5 verbunden sein. Demzufolge kann das Stützrad 22 drehbar an der Stützachse 39 gelagert sein.

Fig. 2 zeigt, dass eine Mehrzahl von Durchbrüchen 38 und weiteren Durchbrüchen 40 zur bedarfsweisen Anordnung und Anpassung der Anzahl der Antriebsräder 13 und der Stützräder 22 vorgesehen ist. Diese mehreren Durchbrüche 38 und weiteren Durchbrüche 40 können darüber hinaus auch zum Positionswechsel des Antriebsrades 13 und des Stützrades 22 dienen. Auch können in Abhängigkeit der Prozessaufgabe eine unterschiedliche Anzahl von Antriebsrädern 13 und/oder Stützrädern 22 eingesetzt werden. Letztlich kann die Anzahl der Durchbrüche 38 die Anzahl der eingesetzten Antriebsräder 13 bzw. die Anzahl der weiteren Durchbrüche 40 die Anzahl der Stützräder 22 überschreiten, so dass eine Verstellung der Antriebsräder 13 bzw. der Stützräder 22 sichergestellt werden kann, auch bei fertiggestellter Zerkleinerungsvorrichtung 1.

Ein äußerer Eingriff für das Zentralrad 11 wird über einen Zentraldurchbruch 47 der äußeren Stirnwandung 28 erreicht. In dem Zentraldurchbruch 47 kann die weitere Seitenplatte 33 angeordnet sein.

In weiteren Ausführungsformen kann vorgesehen sein, dass wenigstens ein Antriebsrad 13 und/oder wenigstens eine Stützrad 22 über ein an der Antriebswelle 37 bzw. der Stützachse 39 angeordnetes Verspannmittel 41, bevorzugt eine Gewindespindel, gegen das Zentralrad 11, bevorzugt in radialer Richtung der Zentralachse 3, verspannbar ist. Ein solches Verspannmittel 41 ist schematisch in Fig. 2 für ein Antriebsrad 13 dargestellt.

Alternativ oder zusätzlich kann vorgesehen sein, dass wenigstens ein Antriebsrad 13 und/oder wenigstens ein Stützrad 22 in einer Exzenter-Lagerungseinheit 42 zur Verstellung in der Position des Antriebsrades 13 bzw. des Stützrades 22 in radialer Richtung der Zentralachse 3 gelagert ist. Eine Exzenter-Lagerungseinheit 42 ist schematisch in Fig. 2 für ein Antriebsrad 13 dargestellt.

Darüber hinaus kann in weiteren, nicht dargestellten Ausführungsformen vorgesehen sein, dass die Antriebswelle 37 und/oder die Stützachse 39 in einem Schiebesitz zur Verstellung in der Position des Antriebsrades 13 bzw. des Stützrades 22 in radialer Richtung der Zentralachse 3 gelagert ist.

Fig. 2 zeigt schematisch, dass die an den Antriebsrädern angeordneten Antriebswellen 37, bevorzugt gemeinsam mit den an den Stützrädern 22 angeordneten Stützachsen 39 über ein Spannmittel 43 gegen das Zentralrad 11 vorgespannt sind. Die Vorspannung erfolgt bevorzugt in radialer Richtung der Zentralachse 3. Die Antriebswellen 37 und insbesondere gemeinsam mit den Stützachsen 39 sind somit über das Spannmittel 43 gemeinsam verbunden. Das Spannmittel 43 kann als Gliederkette und/oder Spannseil, insbesondere Stahlseil, ausgebildet sein.

In Fig. 2 ist weiter wenigstens eine Stützeinrichtung 44 dargestellt, die an der weiteren Seitenplatte 33 zur Abstützung und/oder Begrenzung der Bewegung des Zentralrades 11 in axialer Richtung der Zentralachse 3 vorgesehen ist. In dem dargestellten Ausführungsbeispiel greifen je zwei Stützeinrichtungen 44 an die weitere Seitenplatte 33 an.

Die Stützeinrichtung 44 weist eine sich an der Außenseite der weiteren Seitenplatte 33 abrollende bzw. dem gegenüber drehbare Stützrolle 45 auf. Die Stützrolle 45 ist insbesondere als Vollkörper ausgebildet. Ferner kann die Stützeinrichtung 44 an der äußeren Stirnwandung 28 des Gestells 5 befestigt sein und letztlich über den Zentraldurchbruch 47 an der weiteren Seitenplatte 33 angreifen. So kann die Stützeinrichtung 44 bzw. die Stützrolle 45 kraftschlüssig auf die weitere Seitenplatte 33 einwirken.

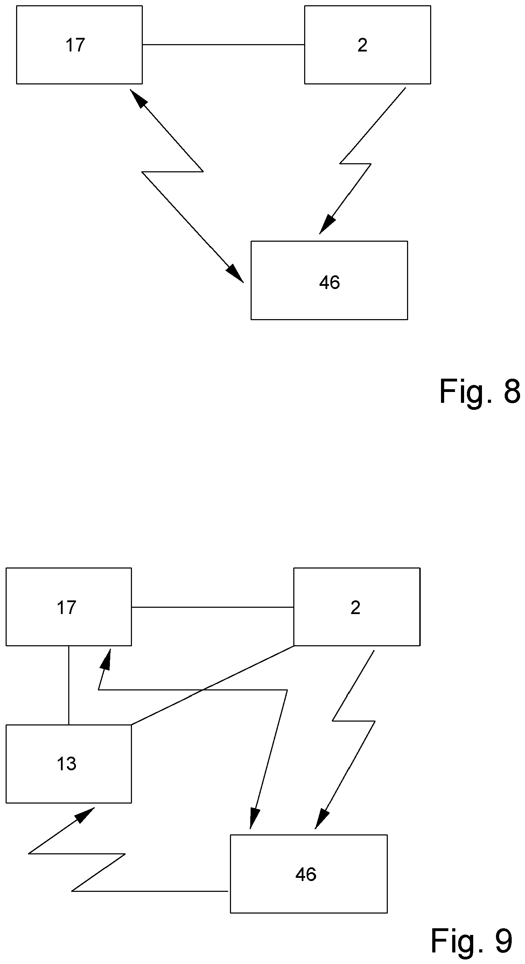

In Fig. 8 und 9 ist schematisch ein Zusammenwirken von Bauteilen der Zerkleinerungsvorrichtung 1 gezeigt, wobei eine Überwachungseinrichtung 46 in der Zerkleinerungsvorrichtung 1 integriert ist, die mit weiteren Bauteilen bzw. Bestandteilen der Zerkleinerungsvorrichtung 1 zusammenwirken kann, insbesondere zur Steuerung und/oder Überwachung dieser weiteren Bauteile.

Die Überwachungseinrichtung 46 ist insbesondere zur Detektion eines Überlastfalls vorgesehen. Nicht dargestellt ist, dass die Überwachungseinrichtung 46 eine Messeinrichtung oder eine Mehrzahl von Messeinrichtungen zur Messung der Drehzahl der Zerkleinerungswalze 2 und/oder des Drehmomentes wenigstens eines Antriebsmotors 17 eines Antriebsrades 13 aufweist.

Fig. 8 zeigt schematisch, dass der Antriebsmotor 17 bzw. alle Antriebsmotoren 17 über die Überwachungseinrichtung 46 steuerbar ist. Insbesondere kann die Überwachungseinrichtung 46 den oder die Antriebsmotoren 17 im Überlastfall oder bei drohendem Überlastfall dahingehend ansteuern, dass das Drehmoment des Antriebsmotors 17 erhöht wird. Dies kann wiederum zur Erhöhung des Anpressdruckes zwischen Antriebsrad 13 und Zentralrad 11 führen, was wiederum die Drehmomentübertragung verbessern bzw. erhöhen kann. Alternativ oder zusätzlich kann auch vorgesehen sein, dass die Drehrichtung des Antriebsmotors 17 umgekehrt wird, insbesondere so dass die Drehrichtung der Zerkleinerungswalze 2 für eine Reversierbewegung umgekehrt wird. Die Reversierbewegung kann insbesondere begrenzt werden, beispielsweise bis zu einem maximalen Drehwinkel der erfolgten Reversierbewegung, der beispielsweise zwischen 5° bis 20° liegen kann.

Fig. 9 zeigt schematisch, dass die Überwachungseinrichtung 46 auch auf das Antriebsrad 13 einwirken kann, insbesondere derart, dass im Überlastfall oder bei drohendem Überlastfall der Anpressdruck des Antriebsrades 13 an das Zentralrad 11 über eine Verstellung des Antriebsrades 13 in radialer Richtung der Zentralachse 3 erreicht werden kann. Die Verstellung des Antriebsrades 13 kann insbesondere über eine Verstellung der Antriebswelle 37 in radialer Richtung bzw. mit zumindest einem Anteil in radialer Richtung der Zentralachse 3 und/oder über das entsprechende Verspann- bzw. Spannmittel des Antriebsrades 13 bzw. der Antriebswelle 37 erreicht werden.

Nicht dargestellt ist, dass bei weiteren Ausführungsformen vorgesehen sein kann, dass die Überwachungseinrichtung 46 derart ausgebildet ist, dass im Überlastfall oder bei drohendem Überlastfall für einen festgelegten Zeitraum zunächst der Anpressdruck des Antriebsrades 13 auf das Zentralrad 11 über eine Erhöhung des Drehmomentes des Antriebsmotors 17 oder über eine Verstellung des Antriebsrades 13 in radialer Richtung der Zentralachse 3 erhöht wird. Sollte eine solche Maßnahme nicht dazu führen, dass der Überlastfall oder der drohende Überlastfall behoben werden kann, kann nach Überschreiten eines festgelegten Zeitraums - beispielsweise zwischen 5 bis 10 Minuten - und der Detektion eines weiterhin bestehenden Überlastfalls oder drohenden Überlastfalls die Reversierbewegung der Zerkleinerungswalze 2 über eine Drehrichtungsumkehr des/der Antriebsmotor(en) 17 eingeleitet werden.

Zudem ist in dem dargestellten Ausführungsbeispiel nicht gezeigt, dass die Überwachungseinrichtung 46 derart ausgebildet sein kann, dass nach maximal 10, insbesondere zwischen 2 bis 5, erfolgen Reversierbewegungen der Zerkleinerungswalze 2 innerhalb eines weiteren vorgegebenen Zeitraums, beispielsweise 5 Minuten, die Zerkleinerungsvorrichtung 1 abgeschaltet wird. Ein Abschalten der Zerkleinerungsvorrichtung 1 kann damit gekoppelt sein, dass eine Signaleinrichtung, die mit der Überwachungseinrichtung 46 verbunden sein kann, ein optisches und/oder akustisches Warnsignal für das Bedienpersonal ausgibt.

Darüber hinaus kann die Überwachungsvorrichtung 46 auch zur synchronen Steuerung aller Antriebsmotoren 17 auch während der Regelbetriebssituation und insbesondere im Lastfall oder im Überlastfall ausgebildet sein.

### Bezugszeichenliste:

- 1: Zerkleinerungsvorrichtung
- 2: Zerkleinerungswalze
- 3: Zentralachse
- 4: Antriebseinrichtung
- 5: Gestell
- 6: Untergrund
- 7: Zerkleinerungswerkzeuge
- 8: Gegenkamm
- 9: Schlitze
- 10: Gegenkammzähne
- 11: Zentralrad
- 12: Außenoberfläche von 11
- 13: Antriebsrad
- 13a: erstes Antriebsrad
- 13b: weiteres Antriebsrad
- 14: Außenoberfläche von 13
- 15: stirnseitiges Ende von 2
- 15a: erstes stirnseitiges Ende von 2
- 15b: weiteres stirnseitiges Ende von 2
- 16: Drehachse
- 17: Antriebsmotor
- 18: obere Hälfte
- 19: untere Hälfte
- 20: Dämpfungsmittel
- 21: Scheibenrad
- 22: Stützrad
- 22a: erstes Stützrad
- 22b: weiteres Stützrad
- 23: Mittelachse von 22
- 24: weiteres Dämpfungsmittel
- 25: Scheibenrad von 13
- 26: Scheibenrad von 22
- 27: Aufnahmeraum
- 28: äußere Stirnwandung
- 29: äußere Seitenwandung
- 30: Unterteil
- 31: Oberteil
- 32: Seitenplatte
- 33: weitere Seitenplatte
- 34: weitere Wandung
- 35: Labyrinthdichtung
- 36: Spiralrippe
- 37: Antriebswelle
- 38: Durchbruch
- 39: Stützachse
- 40: weiterer Durchbruch
- 41: Verspannmittel
- 42: Exzenter-Lagerungseinheit
- 43: Spannmittel
- 44: Stützeinrichtung
- 45: Stützrolle
- 46: Überwachungseinrichtung
- 47: Zentraldurchbruch

## Patentansprüche

1. Zerkleinerungsvorrichtung (1) zur Zerkleinerung von Zerkleinerungsgut, insbesondere zur Verwendung im Bereich des Recyclings und der Abfallverarbeitung, mit wenigstens einer um eine Zentralachse (3) drehbaren Zerkleinerungswalze (2) und wenigstens einer Antriebseinrichtung (4) zum Antrieb der Zerkleinerungswalze (2), wobei die Antriebseinrichtung (4) ein drehsteif mit der Zerkleinerungswalze (2) verbundenes Zentralrad (11) und wenigstens ein an der Außenoberfläche (12) des Zentralrades (11) kraftschlüssig angreifendes und zum Antrieb des Zentralrades (11) ausgebildetes Antriebsrad (13) aufweist, wobei das wenigstens eine Antriebsrad (13) gemeinsam mit dem Zentralrad (11) einen Reibradantrieb bildet, **dadurch gekennzeichnet, dass** wenigstens ein an der Außenoberfläche (12) des Zentralrades (11) kraftschlüssig angreifendes Stützrad (22) vorgesehen ist.

2. Zerkleinerungsvorrichtung nach Anspruch 1, **dadurch gekennzeichnet, dass** an beiden stirnseitigen Enden (15a, 15b) der Zerkleinerungswalze (2) je eine Antriebseinrichtung (4) und/oder jeweils ein Zentralrad (11) mit dem wenigstens einen zusammenwirkenden Antriebsrad (13) vorgesehen ist, insbesondere wobei die Antriebsräder (13) an beiden stirnseitigen Enden (15a, 15b) der Zerkleinerungswalze (2) paarweise einander gegenüberliegend angeordnet sind.

3. Zerkleinerungsvorrichtung nach Anspruch 1 oder 2, **dadurch gekennzeichnet, dass** ein Antriebsmotor (17) zum Antrieb des Antriebsrades (13) vorgesehen ist und dass, vorzugsweise, eine Mehrzahl von Antriebsrädern (13), insbesondere eine geradzahlige Mehrzahl, vorgesehen ist.

4. Zerkleinerungsvorrichtung nach einem der vorhergehenden Ansprüche, **dadurch gekennzeichnet, dass** das Zentralrad (11) ein, bevorzugt kreisringförmiges und/oder als Reifen ausgebildetes, flexibles Dämpfungsmittel (20) aufweist.

5. Zerkleinerungsvorrichtung nach einem der vorhergehenden Ansprüche, **dadurch gekennzeichnet, dass** die Stützräder (22) an beiden stirnseitigen Enden (15a, 15b) der Zerkleinerungswalze (2) paarweise einander gegenüberliegend angeordnet sind, und/oder dass eine, bevorzugt geradzahlige, Mehrzahl von Stützrädern (22) vorgesehen ist, insbesondere wobei die Stützräder (22) an der unteren, dem Untergrund (6) zugewandten Hälfte (19) des Zentralrades (11) angeordnet sind.

6. Zerkleinerungsvorrichtung nach Anspruch 4, **dadurch gekennzeichnet, dass** das Antriebsrad (13) und/oder das Stützrad (22) ein, insbesondere kreisringförmiges und/oder als Reifen ausgebildetes, flexibles weiteres Dämpfungsmittel (24) aufweist.

7. Zerkleinerungsvorrichtung nach einem der vorhergehenden Ansprüche, **dadurch gekennzeichnet, dass** ein Gestell (5) zur Halterung und/oder Lagerung der Zerkleinerungswalze (2) und der wenigstens eine Antriebseinrichtung (4) vorgesehen ist.

8. Zerkleinerungsvorrichtung nach einem der vorhergehenden Ansprüche, **dadurch gekennzeichnet, dass** an der der Zerkleinerungswalze (2) zugewandten Seitenfläche des Zentralrades (11) eine Seitenplatte (32) angeordnet ist.

9. Zerkleinerungsvorrichtung nach Anspruch 8, **dadurch gekennzeichnet, dass** an der der Zerkleinerungswalze (2) abgewandten Seitenfläche des Zentralrades (11) eine, bevorzugt drehsteif mit dem Zentralrad (11) verbundene, weitere Seitenplatte (33) angeordnet ist.

10. Zerkleinerungsvorrichtung nach Anspruch 7, **dadurch gekennzeichnet, dass** der Antriebsmotor (17) eine Antriebswelle (37) aufweist, die durch einen Durchbruch (38) der äußeren Stirnwandung (28) des Gestells (5) geführt und mit dem Antriebsrad (13) verbunden ist.

11. Zerkleinerungsvorrichtung nach einem der vorhergehenden Ansprüche, **dadurch gekennzeichnet, dass** das wenigstens eine Antriebsrad (13) und/oder dass das wenigstens eine Stützrad (22) insbesondere über ein an der Antriebswelle (37) bzw. der Stützachse (39) angeordnetes Verspannmittel (41), bevorzugt eine Gewindespindel, gegen das Zentralrad (11), bevorzugt in radialer Richtung der Zentralachse (3), verspannbar ist.

12. Zerkleinerungsvorrichtung nach einem der vorhergehenden Ansprüche, **dadurch gekennzeichnet, dass** wenigstens eine Stützeinrichtung (44) an der weiteren Seitenplatte (33) zur Abstützung und/oder Begrenzung der Bewegung des Zentralrades (11) in axialer Richtung der Zentralachse (3) vorgesehen ist.

13. Zerkleinerungsvorrichtung nach einem der vorhergehenden Ansprüche, **dadurch gekennzeichnet, dass** eine Überwachungseinrichtung (46) zur Detektion eines Überlastfalls vorgesehen ist.

14. Zerkleinerungsvorrichtung nach Anspruch 13, **dadurch gekennzeichnet, dass** die Überwachungseinrichtung (46) im Überlastfall oder bei drohendem Überlastfall, bevorzugt zur Erhöhung des Anpressdruckes des Antriebsrades (13) an das Zentralrad (11), zur Verstellung des Antriebsrades (13) in radialer Richtung der Zentralachse (3) ausgebildet ist.

15. Zerkleinerungsvorrichtung nach einem der Ansprüche 13 oder 14, **dadurch gekennzeichnet, dass** die Überwachungseinrichtung (46) derart ausgebildet ist, dass im Überlastfall oder bei drohendem Überlastfall für einen festgelegten Zeitraum zunächst der Anpressdruck des Antriebsrades (13) auf Zentralrad (11) über eine Erhöhung des Drehmomentes des Antriebsmotors (17) und/oder über eine Verstellung des Antriebsrades (13) in radialer Richtung der Zentralachse (3) erhöht wird.

## Claims

1. Shredding device (1) for shredding material to be shredded, in particular for use in the field of recycling and waste processing, comprising at least one shredding roller (2) rotatable about a central axis (3) and at least one drive device (4) for driving the shredding roller (2), wherein the drive device (4) has a central wheel (11) connected to the comminuting roller (2) in a torsionally rigid manner and at least one drive wheel (13) engaging frictionlocked on the outer surface (12) of the central wheel (11) and designed to drive the central wheel (11), wherein the at least one drive wheel (13) together with the central wheel (11) forms a friction wheel drive, **characterized in that** at least one support wheel (22) frictionally engaging the outer surface (12) of the central wheel (11) is provided.

2. Shredding device according to claim 1, **characterized in that** a drive device (4) and/or a central wheel (11) with the at least one cooperating drive wheel (13) is provided at each of the two front ends (15a, 15b) of the shredding roller (2), in particular wherein the drive wheels (13) are arranged in pairs opposite each other at both front ends (15a, 15b) of the shredding roller (2).

3. Shredding device according to claim 1 or 2, **characterized in that** a drive motor (17) is provided for driving the drive wheel (13) and that, preferably, a plurality of drive wheels (13), in particular an even-numbered plurality, is provided.

4. Shredding device according to one of the preceding claims, **characterized in that** the central wheel (11) has a flexible damping means (20), preferably circular and/or formed as a tire.

5. Shredding device according to one of the preceding claims, **characterized in that** the supporting wheels (22) are arranged in pairs opposite one another at both front ends (15a, 15b) of the shredding roller (2), and/or **in that** a, preferably even-numbered, plurality of supporting wheels (22) is provided, in particular the supporting wheels (22) being arranged on the lower half (19), facing the base (6), of the central wheel (11).

6. Shredding device according to claim 4, **characterized in that** the drive wheel (13) and/or the support wheel (22) has a flexible further damping means (24), in particular circular ring-shaped and/or formed as a tire.

7. Shredding device according to one of the preceding claims, **characterized in that** a frame (5) is provided for holding and/or supporting the shredding roller (2) and the at least one drive device (4).

8. Shredding device according to one of the preceding claims, **characterized in that** a side plate (32) is arranged on the side surface of the central wheel (11) facing the shredding roller (2).

9. Shredding device according to claim 8, **characterized in that** a further side plate (33), preferably connected to the central wheel (11) in a torsionally rigid manner, is arranged on the side surface of the central wheel (11) facing away from the shredding roller (2).

10. Shredding device according to claim 7, **characterized in that** the drive motor (17) has a drive shaft (37) which is guided through an aperture (38) of the outer end wall (28) of the frame (5) and is connected to the drive wheel (13).

11. Shredding device according to one of the preceding claims, **characterized in that** the at least one drive wheel (13) and/or **in that** the at least one support wheel (22) can be braced against the central wheel (11), preferably in the radial direction of the central axis (3), in particular via a bracing means (41), preferably a threaded spindle, arranged on the drive shaft (37) and/or the support axis (39).

12. Shredding device according to one of the preceding claims, **characterized in that** at least one support device (44) is provided on the further side plate (33) for supporting and/or limiting the movement of the central wheel (11) in the axial direction of the central axis (3).

13. Shredding device according to one of the preceding claims, **characterized in that** a monitoring device (46) is provided for detecting an overload case.

14. Shredding device according to claim 13, **characterized in that** the monitoring device (46) is designed to adjust the drive wheel (13) in the radial direction of the central axis (3) in the event of overload or imminent overload, preferably to increase the contact pressure of the drive wheel (13) against the central wheel (11).

15. Shredding device according to one of the claims 13 or 14, **characterized in that** the monitoring device (46) is designed in such a way that, in the event of an overload or in the event of an imminent overload, the contact pressure of the drive wheel (13) on the central wheel (11) is first increased for a defined period of time by means of an increase in the torque of the drive motor (17) and/or by means of an adjustment of the drive wheel (13) in the radial direction of the central axis (3).

## Revendications

1. Dispositif de broyage (1) pour le broyage de produits à broyer, en particulier pour l'utilisation dans le domaine du recyclage et du traitement des déchets, avec au moins un cylindre de broyage (2) pouvant tourner autour d'un axe central (3) et au moins un dispositif d'entraînement (4) pour l'entraînement du cylindre de broyage (2), le dispositif d'entraînement (4) présentant une roue centrale (11) reliée de manière rigide en rotation au cylindre de broyage (2) et au moins une roue d'entraînement (13) agissant par friction sur la surface extérieure (12) de la roue centrale (11) et conçue pour entraîner la roue centrale (11), l'au moins une roue d'entraînement (13) formant conjointement avec la roue centrale (11) un entraînement par roue de friction, **caractérisé en ce qu'**il est prévu au moins une roue d'appui (22) agissant par friction sur la surface extérieure (12) de la roue centrale (11).

2. Dispositif de broyage selon la revendication 1, **caractérisé en ce qu'**il est prévu aux deux extrémités frontales (15a, 15b) du cylindre de broyage (2) respectivement un dispositif d'entraînement (4) et/ou respectivement une roue centrale (11) avec l'au moins une roue d'entraînement (13) coopérant, en particulier les roues d'entraînement (13) étant disposées par paires en face l'une de l'autre aux deux extrémités frontales (15a, 15b) du cylindre de broyage (2).

3. Dispositif de broyage selon la revendication 1 ou 2, **caractérisé en ce qu'**un moteur d'entraînement (17) est prévu pour entraîner la roue d'entraînement (13) et **en ce que**, de préférence, une pluralité de roues d'entraînement (13), en particulier une pluralité de roues paires, est prévue.

4. Dispositif de broyage selon l'une des revendications précédentes, **caractérisé en ce que** la roue centrale (11) présente un moyen d'amortissement flexible (20), de préférence en forme d'anneau circulaire et/ou de pneu.

5. Dispositif de broyage selon l'une des revendications précédentes, **caractérisé en ce que** les roues d'appui (22) sont disposées aux deux extrémités frontales (15a, 15b) du cylindre de broyage (2) par paires opposées l'une à l'autre, et/ou **en ce qu'**il est prévu une pluralité, de préférence en nombre pair, de roues d'appui (22), en particulier les roues d'appui (22) étant disposées sur la moitié inférieure (19), tournée vers le sol (6), de la roue centrale (11).

6. Dispositif de broyage selon la revendication 4, **caractérisé en ce que** la roue d'entraînement (13) et/ou la roue d'appui (22) présente un autre moyen d'amortissement (24) flexible, en particulier en forme d'anneau circulaire et/ou conçu comme un pneu.

7. Dispositif de broyage selon l'une des revendications précédentes, **caractérisé en ce qu'**un châssis (5) est prévu pour supporter et/ou loger le cylindre de broyage (2) et le au moins un dispositif d'entraînement (4).

8. Dispositif de broyage selon l'une des revendications précédentes, **caractérisé en ce qu'**une plaque latérale (32) est disposée sur la surface latérale de la roue centrale (11) tournée vers le cylindre de broyage (2).

9. Dispositif de broyage selon la revendication 8, **caractérisé en ce qu'**une autre plaque latérale (33), de préférence reliée de manière rigide en rotation à la roue centrale (11), est disposée sur la surface latérale de la roue centrale (11) opposée au cylindre de broyage (2).

10. Dispositif de broyage selon la revendication 7, **caractérisé en ce que** le moteur d'entraînement (17) présente un arbre d'entraînement (37) qui est guidé à travers une ouverture (38) de la paroi frontale extérieure (28) du châssis (5) et qui est relié à la roue d'entraînement (13).

11. Dispositif de broyage selon l'une des revendications précédentes, **caractérisé en ce que** l'au moins une roue d'entraînement (13) et/ou l'au moins une roue d'appui (22) peut être serrée contre la roue centrale (11), de préférence dans la direction radiale de l'axe central (3), en particulier par l'intermédiaire d'un moyen de serrage (41), de préférence une broche filetée, disposé sur l'arbre d'entraînement (37) et/ou l'axe d'appui (39).

12. Dispositif de broyage selon l'une des revendications précédentes, **caractérisé en ce qu'**au moins un dispositif de support (44) est prévu sur l'autre plaque latérale (33) pour supporter et/ou limiter le mouvement de la roue centrale (11) dans la direction axiale de l'axe central (3).

13. Dispositif de broyage selon l'une des revendications précédentes, **caractérisé en ce qu'**un dispositif de surveillance (46) est prévu pour détecter un cas de surcharge.

14. Dispositif de broyage selon la revendication 13, **caractérisé en ce que** le dispositif de surveillance (46) est conçu, en cas de surcharge ou de menace de surcharge, de préférence pour augmenter la pression de contact de la roue d'entraînement (13) contre la roue centrale (11), pour déplacer la roue d'entraînement (13) dans la direction radiale de l'axe central (3).

15. Dispositif de broyage selon l'une des revendications 13 ou 14, **caractérisé en ce que** le dispositif de surveillance (46) est conçu de telle sorte que, en cas de surcharge ou en cas de menace de surcharge, on augmente d'abord, pendant une durée déterminée, la pression de contact de la roue d'entraînement (13) sur la roue centrale (11) par l'intermédiaire d'une augmentation du couple de rotation du moteur d'entraînement (17) et/ou par l'intermédiaire d'un déplacement de la roue d'entraînement (13) dans la direction radiale de l'axe central (3).
